# EUROPEAN PATENT APPLICATION

(11) **EP 4 797 172 A1**
(43) Date of publication of application: **26.08.2026**
(21) Application number: 26152218.9
(22) Date of filing: 16.01.2026
(51) Int. Cl.: G06Q 10/0631, G06Q 10/10

(54) **INFORMATION PROCESSING SYSTEM, PROCESSING METHOD, AND NON-TRANSITORY COMPUTER-READABLE MEDIUM**

(30) Priority: 25.02.2025 JP 2025028247
(71) Applicant: Sharp Kabushiki Kaisha, Sakai City, Osaka 590-8522 (JP)
(72) Inventor: NAKAGAWA, Katsuya, Osaka, 590-8522 (JP)
(74) Representative: Müller Hoffmann & Partner

(57) **Abstract**

An information processing system includes a storage to store business processes, and a controller. The controller acquires a message and a file, evaluates the business processes based on the acquired message and/or file, and outputs the business process that is a candidate from among the business processes based on a result of evaluating the business processes.

## Description

### BACKGROUND OF THE INVENTION

### Field of the Invention

The present disclosure relates to an information processing system and the like. This application is based on Japanese Patent Application No. 2025-028247 filed on February 25, 2025, the contents of which are incorporated herein by reference.

### Description of the Background Art

For example, Patent Document 1 discloses a method for generating a group including two or more messages having similar message texts, converting the texts of a plurality of messages belonging to the group selected as a workflow generation target into tasks to be performed by any user, and generating workflow data representing the tasks and a flow between the tasks.

### PRIOR ART DOCUMENT

### PATENT DOCUMENT

Patent Document 1: Japanese Unexamined Patent Application Publication No. 2020-91686

### SUMMARY OF THE INVENTION

An object of the present disclosure is, for example, to evaluate an optimal business process based on a message and a file, thereby making it possible to improve a user's business processing efficiency and productivity.

An information processing system of the present disclosure includes a memory to store a business process, and a controller. The controller acquires a message and a file, evaluates the business process based on the acquired message and/or file, and outputs the business process that is a candidate from among the business processes based on a result of evaluating the business process.

A processing method of the present disclosure includes storing of storing business processes, and controlling. The controlling includes acquiring a message and a file, evaluating the business processes based on the acquired message and/or file, and outputting the business process that is a candidate from among the business processes based on a result of evaluating the business process.

A non-transitory computer-readable medium of the present disclosure causes a computer to implement a storage function of storing business processes, and a control function. The control function includes acquiring a message and a file, evaluating the business processes based on the acquired message and/or file, and outputting the business process that is a candidate from among the business processes based on a result of evaluating the business process.

According to the present disclosure, it is possible to provide an information processing system or the like capable of evaluating an optimal business process for example based on a message and a file to improve a user's business processing efficiency and productivity.

### BRIEF DESCRIPTION OF THE DRAWINGS

FIG. 1 is a diagram for explaining an overview of a system according to a first embodiment.
FIG. 2 is a diagram illustrating a hardware configuration of the system according to the first embodiment.
FIG. 3 is a diagram illustrating a software configuration of the system according to the first embodiment.
FIG. 4 is a diagram illustrating a configuration of a file generator of the system according to the first embodiment.
FIG. 5A is a diagram illustrating an example of user information according to the first embodiment.
FIG. 5B is a diagram illustrating an example of theme information according to the first embodiment.
FIG. 5C is a diagram illustrating an example of message attribute information according to the first embodiment.
FIG. 6A is a diagram illustrating an example of file link information according to the first embodiment.
FIG. 6B is a diagram illustrating an example of message link information according to the first embodiment.
FIG. 6C is a diagram illustrating an example of processing candidates according to the first embodiment.
FIG. 7A is a diagram illustrating an example of a predefined prompt according to the first embodiment.
FIG. 7B is a diagram illustrating an example of interpretation data according to the first embodiment.
FIG. 8A is a diagram illustrating an example of related messages according to the first embodiment.
FIG. 8B is a diagram illustrating an example of a prompt according to the first embodiment.
FIG. 9A is a diagram illustrating an example of an output file according to the first embodiment.
FIG. 9B is a diagram illustrating an example of a message according to the first embodiment.
FIG. 10 is a diagram illustrating a flow of main process according to the first embodiment.
FIG. 11 is a diagram illustrating a flow of interpretation process according to the first embodiment.
FIG. 12 is a diagram illustrating a flow of evaluation process according to the first embodiment.
FIG. 13 is a diagram illustrating an example of an operation example according to the first embodiment.
FIG. 14 is a diagram illustrating an example of an operation example according to the first embodiment.
FIG. 15 is a diagram illustrating an example of an operation example according to the first embodiment.
FIG. 16 is a diagram illustrating an example of an operation example according to the first embodiment.
FIG. 17 is a diagram illustrating an example of an operation example according to the first embodiment.
FIG. 18 is a diagram illustrating an example of an operation example according to the first embodiment.
FIG. 19 is a diagram illustrating an example of an operation example according to the first embodiment.
FIG. 20 is a diagram illustrating a flow of main process according to a second embodiment.
FIG. 21 is a diagram illustrating a flow of evaluation process according to the second embodiment.
FIG. 22 is a diagram illustrating a flow of interpretation process according to a third embodiment.
FIG. 23 is a diagram illustrating an example of an operation example according to the third embodiment.

### DESCRIPTION OF THE PREFERRED EMBODIMENTS

For example, as a method for extracting a predetermined information group from a vast information space with diverse contents, a Retrieval-Augmented Generation (RAG) technology is known, which extracts and utilizes information with high similarity in an embedding space. However, in conventional general information processing apparatus environments, message systems and file systems are separated, and information on various themes and activities is scattered disorderly. Therefore, even if RAG technology is used, it is difficult to accurately machine-recognize the actual business situation, and it has been difficult to provide an output tailored to the desired business situation. Furthermore, it has also been difficult to realize an information processing system in which a language model, for example, actively proposes specific business processing to a user based on the interpretation of the business situation.

An information processing system that solves such problems will be described below in the following embodiments with reference to the drawings. Note that the following embodiments are described as examples of the invention described in the claims, and the technical scope of the present disclosure is not limited to the descriptions of the following embodiments.

### 1. First Embodiment

### 1.1 Overview of System

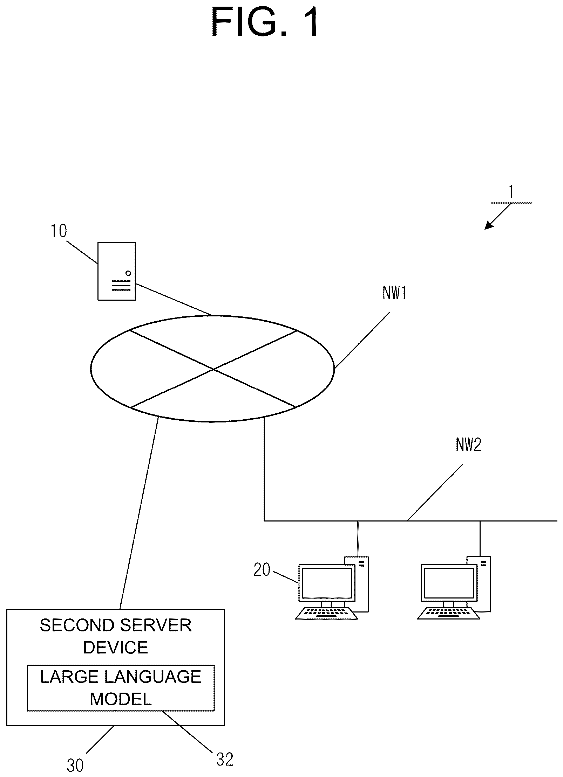

FIG. 1 is a diagram for explaining an overview of a system 1. The system 1 includes a server device 10 and is connected to networks (NW1, NW2). The first server device 10 includes, for example, one or more terminal devices 20 connected via the networks (NW1, NW2). Further, the system 1 may include a second server device 30 as necessary. The first server device 10 can, for example, transmit data to and receive data from the terminal devices 20 and the second server device 30.

The first server device 10, for example, accepts a login from a person (user) who uses the system 1 from a terminal device 20, and manages user data. Here, the user data refers to, for example, information regarding the user, messages posted by the user, and files including images and text uploaded by the user. The user data may also include information on the association between messages and files. Note that the first server device 10 may operate as, for example, a cloud server and manage the user data.

The first server device 10 can, for example, transmit managed user data and information for displaying the user data to the terminal device 20 in response to a request from the terminal device 20. The information for displaying the user data may be, for example, information for displaying a user interface, and may be information such as a markup language like HyperText Markup Language (HTML). Note that the first server device 10 can store and manage the user data in, for example, a memory or the like.

The first server device 10 can, for example, transmit an input sentence based on a message and a file to the second server device 30, and receive an output sentence from the second server device 30. Here, the input sentence refers to a sentence for obtaining an output file based on the message and the file when the user selects and executes a business process. The output sentence is a sentence output in response to the input sentence. Here, the business process refers to processing related to business, and may be, for example, processing for creating business documents such as an approval document, a purchase order, and an acceptance certificate.

The terminal device 20 can, for example, input (transmit) a message and a file as user data to the first server device 10 via the networks (NW1, NW2). The terminal device 20 can, for example, input (transmit) user data to the first server device 10 by posting a message or uploading a file including an image, text, or the like via a user interface.

Further, similarly, the terminal device 20 can display or download the user data stored in the server device 10 via the user interface. In this way, the terminal device 20 can transmit and receive messages and files to and from different terminal devices 20 via the first server device 10, enabling communication by messages and sharing of files.

Note that in the present embodiment, HTML supplied from the first server device 10 (cloud server) is interpreted and executed by the terminal device 20, for example, with a web browser or the like. The terminal device 20 may display the user interface using a web browser, or may display the user interface via a separate dedicated application program or the like. Further, the terminal device 20 may be, for example, an information processing apparatus such as a smartphone or a tablet.

Furthermore, the system 1 may include the second server device 30 as necessary. The second server device 30 may be included. The second server device 30 is connected to, for example, the networks (NW1, NW2). Further, the second server device 30 may store a large language model 32 as a language model.

The large language model 32 is one of the language models and is generally called an LLM (Large Language Model). Although the large language model 32 is stored in the second server device 30, it may be stored in the first server device 10. The first server device 10 may store a language model different from the large language model 32, for example, a small language model (SLM) as an edge LLM. That is, as the language model, a language model with a large amount of so-called training data (LLM) may be stored in the second server device 30, and a language model (SLM) with less training data than the large language model 32 may be stored in the first server device 10 or an other device. Further, the large language model 32 may use a model such as an LMM (Large Multimodal Model) capable of processing multiple types of information such as text, images, and audio.

The large language model 32 may be prepared by a service provider that builds the system 1, or an external service may be used. For example, large language models such as GPT (Generative Pre-trained Transformers, GPT-3, GPT-4, GPT-4o), PaLM (Pathways Language Model), LLaMA (Large Language Model Meta AI), and tsuzumi may be used.

### 1.2 Hardware Configuration

### 1.2.1 Common Configuration

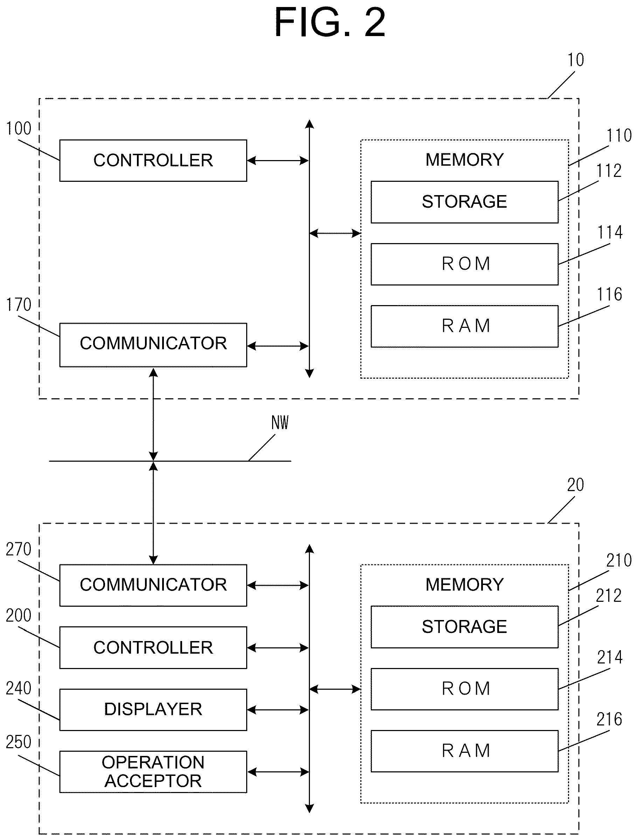

FIG. 2 is a diagram illustrating a hardware configuration of each device in the present embodiment. The first server device 10 and the terminal device 20 each include at least a controller, a memory, and a communicator. Further, each device has general functions as necessary. Here, the controller, the memory, and the communicator of each device will be described below. Note that the second server device 30 has the same configuration as the first server device 10, and thus detailed description thereof is omitted.

The controller (for example, the controller 100, the controller 200) is a functional unit for controlling the entirety of each device. The controller implements various functions by reading and executing various programs stored in the memory. The controller may be realized by one or more control devices/arithmetic devices (a central processing unit (CPU), a System on a Chip (SoC)). Further, the controller may be configured by one or more control circuits.

The memory (for example, the memory 110, the memory 210) stores various programs necessary for the operation of each device and various data. The memory is configured by, for example, a storage, a ROM (Read Only Memory), a RAM (Random Access Memory), and the like.

The storage (for example, the storage 112, the storage 212) is a non-volatile storage device capable of storing programs and data. For example, it may be configured by a storage device such as an HDD (Hard Disk Drive) or an SSD (Solid State Drive). Further, the storage may be configured by an externally connectable USB (Universal Serial Bus) memory. Further, the storage may be, for example, a storage area on the cloud.

The ROM (for example, the ROM 114, the ROM 214) is a non-volatile memory capable of retaining programs and data even when the power is turned off. The ROM may store, for example, firmware of each device, initial applications, and the like.

The RAM (for example, the RAM 116, the RAM 216) is a main memory mainly used when the controller of each device executes processing. The RAM is a rewritable memory that temporarily holds programs read from the storage of each device or the ROM of each device, and data including execution results.

The communicator (for example, the communicator 170, the communicator 270) is a communication interface for communicating with other devices. For example, the communicator may be a network interface connectable to a wireless LAN (Local Area Network), or a network interface wired-connectable to Ethernet (registered trademark). Further, the communicator may be, for example, a communication device connectable to a mobile communication network such as LTE (Long Term Evolution)/4G/5G/6G.

### 1.2.2 Terminal Device

Next, the hardware configuration of the terminal device 20 will be described with reference to FIG. 2.

The display 240 is a display device capable of displaying various information and various screens such as an execution screen. The display 240 may be, for example, a display device such as a liquid crystal display (LCD), an organic electroluminescence (EL) display, an electrophoretic display, or the like. Further, the display 240 includes an interface to which a display device can be connected. For example, it may be configured by an external display device connected via HDMI (registered trademark) (High-Definition Multimedia Interface), DVI (Digital Visual Interface), or Display Port.

The operation acceptor 250 is an operation device capable of receiving an operation input from a user or an administrator. For example, it may be a software key displayed on a touch panel integrated with the display 240, or a hardware key such as an operation button. Further, the operation acceptor 250 may be, for example, an operation device such as a keyboard or a mouse. Further, the operation acceptor 250 may include an interface (for example, USB) to which an operation device can be connected. For example, each device may be connected to a different operation device (keyboard, mouse, or the like) via the interface.

### 1.3 Software Configuration

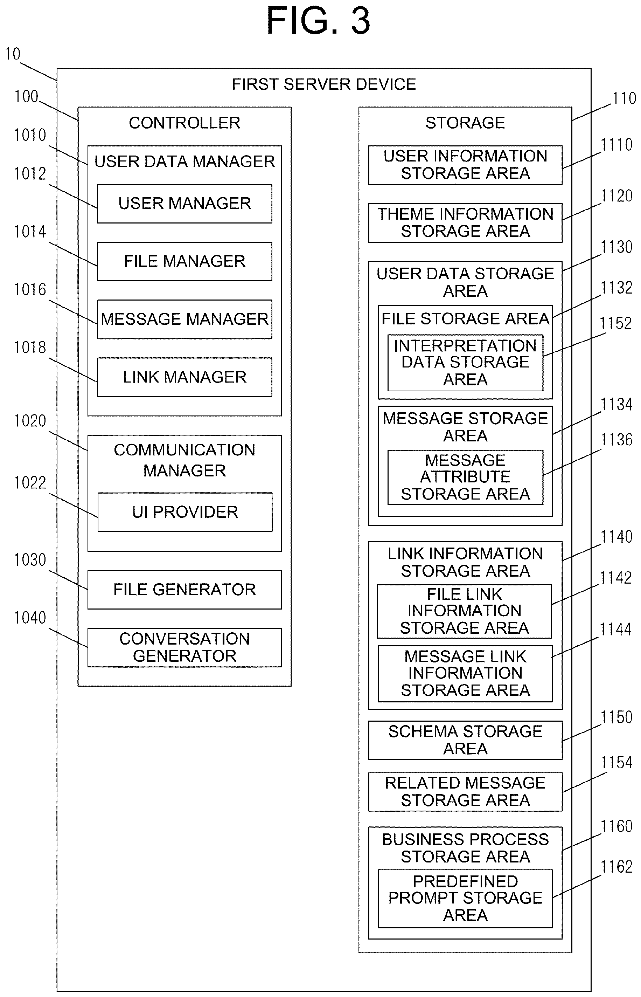

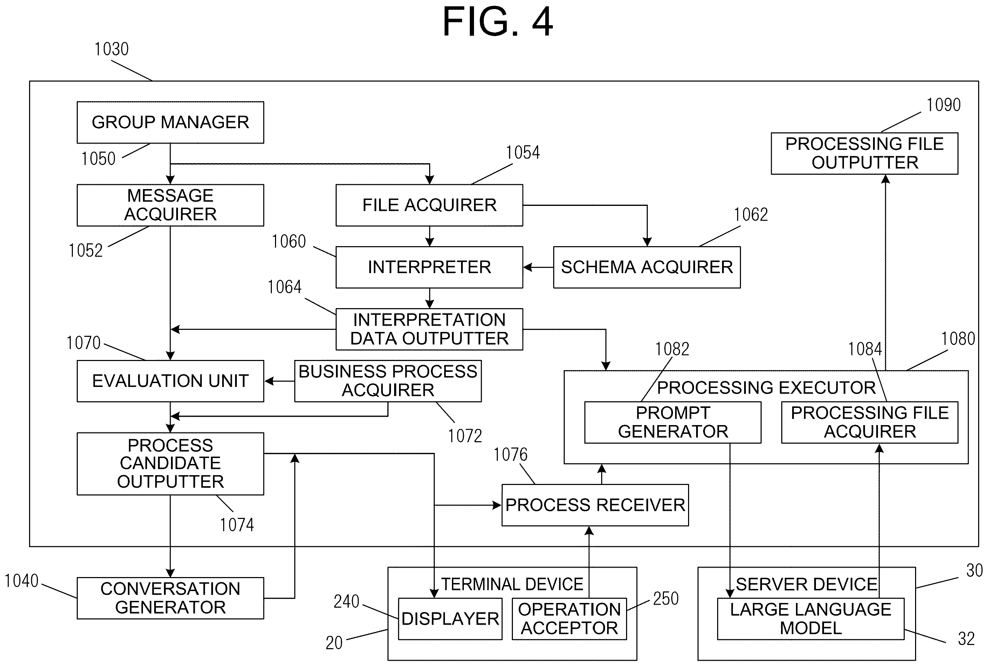

The main software configurations in each device included in the system 1 will be described with reference to FIGs. 3 and 4. FIG. 3 is a diagram illustrating a software configuration of the first server device 10, and FIG. 4 is a diagram illustrating a configuration of a file generator of the first server device 10. Note that the software configurations illustrated in FIGs. 3 and 4 mainly describe configurations necessary in the present embodiment, and other configurations are omitted.

### 1.3.1 First Server Device

First, the main software configuration of the first server device 10 will be described. For example, the controller 100 reads and executes programs stored in the memory 110 (the storage 112, the ROM 114), thereby implementing a user data manager 1010 (a user manager 1012, a file manager 1014, a message manager 1016, a link manager 1018), a communication manager 1020 (a UI provider 1022), a file generator 1030, and a conversation generator 1040.

The user data manager 1010 executes control necessary for managing the user data of the system 1. The user data manager 1010, together with a communication manager 1020 described later, can provide a service for structurally managing a plurality of pieces of data. Note that the user data manager 1010 executes various functions of the user manager 1012, the file manager 1014, the message manager 1016, and the link manager 1018.

Further, the user data manager 1010 can manage user data in association with a group (user group) as necessary. Here, the group refers to, for example, a unit capable of managing files and messages for each common topic. The group may be divided into one or more themes. Further, within a theme, a user may create an area for each topic. This area is referred to as a workspace in the present embodiment. The workspace is a workplace provided for each task performed by the user. One or more workspaces can be created for each theme. For example, the user may transmit one or more files to the workspace and exchange messages in association with the files. Further, the theme may also be subdivided into one or more sub-themes.

The user data manager 1010 can manage information regarding users, messages, and files among the user data in association with groups. Note that the group in the present embodiment is a comprehensive expression. For example, the group may refer to the workspace described above. Further, the group may refer to the theme described above.

Further, the user data manager 1010 may manage the group, the theme, and the workspace at hierarchical levels. That is, the hierarchical level may mean that, for example, one or more themes are included in a group. Further, one or more workspaces may be included in a theme. Further, a configuration may be adopted in which a workspace is directly included in a group. The name of the hierarchy mentioned here is an example, and a configuration may be adopted in which the level of the upper hierarchy includes the level of the hierarchy.

The user data manager 1010 manages the user data in association with the group, thereby making it possible to display, for example, messages and files associated with the group only to members. Here, the member refers to a user associated with the group. Further, the user data manager 1010 can also transmit and receive user data for each group, for example. Note that the user data manager 1010 can execute processing such as, for example, creating a group, changing a display name, and registering a user in a group.

The user manager 1012 stores and manages information regarding users, including, for example, user identification information, in a user data storage area 1130. Here, the user identification information is information for identifying an individual user, and may be, for example, non-overlapping information such as a user name or a user ID. The management of information regarding users includes, for example, user registration, user name setting, user affiliation setting, and the like.

The file manager 1014 stores files acquired from the user data manager 1010 in a file storage area 1132. Here, if the acquired file includes information related to a group, the file manager 1014 may store the file in association with the group, for example. The file manager 1014 may manage files in, for example, a folder corresponding to the group.

The message manager 1016 stores messages acquired from the user data manager 1010 in a message storage area 1134. The message manager 1016 can store and manage message attributes in a message attribute storage area 1136 together with the messages. The message attributes are, for example, information on attributes related to messages, such as the source and destination of the message, and whether the message is unread or read. Further, if the acquired message includes information related to a group, the message manager 1016 may store the message in the message attributes in association with the group, for example.

The link manager 1018 stores and manages information on the association between messages and files as link information in a link information storage area 1140. Here, the link information is information indicating the link state between a message and a file. The link manager 1018 organizes the user data in a link structure such as, for example, nodes and edges, and manages each node so as to include at least user data and link information.

Note that in the present embodiment, the link manager 1018 links a message to a file or a folder as link information, but may include, for example, a theme, a page in a file, and a component in a file, in addition to the file or the folder.

The communication manager 1020 performs management for communication performed by a plurality of terminal devices 20, such as the terminal device 20 and a different terminal device 20, via the system 1. Here, communication includes, for example, posting messages, uploading files, and sharing user data. The communication manager 1020 can transmit and receive user data transmitted from and received by the user data manager 1010 to and from the terminal device 20 via, for example, a user interface displayable on the terminal device 20.

The communication manager 1020 includes a UI provider 1022. The UI provider 1022 displays user data and provides a display screen displayed on the display 240 of the terminal device 20, for example, as a UI (User Interface) for inputting user data.

The UI provider 1022 can provide a display screen displayed on the display 240, such as an operation screen capable of displaying users, messages, and files, and performing operations for inputting messages and files, such as posting messages and uploading files, and a notification screen for notifying of new messages.

Further, the UI provider 1022 can provide, for example, an operation screen capable of displaying users, messages, and files, and performing operations for inputting messages and files, such as posting messages and uploading files, and a notification screen for notifying of new messages. Further, the UI provider 1022 can provide a display screen for inputting the link state of a message and a file on, for example, an operation screen or the like to associate the message and the file.

Note that, on the display screen provided by the UI provider 1022, the link state does not have to be input simultaneously with the message or file. The UI provider 1022 can input the link state of, for example, an already posted message or an uploaded file to associate the message and the file.

The UI provider 1022 may provide, for example, a display screen that displays a list of messages and files associated with user identification information, respectively, or provide a display screen that displays a selected message and file when either the message or the file is selected from the list display. Further, the UI provider 1022 may provide a display screen that displays messages on the display 240 as a timeline, for example, in chronological order. Note that, as a method of displaying a user, the UI provider 1022 may display, for example, a user name and a user icon. Here, the user icon is, for example, an icon identified by a color, a pattern, an image, or the like for identifying the user.

Note that, here, the icon refers to various data and processing functions displayed as, for example, a picture, an emoji, a symbol, or a character on the display screen. For example, when the user selects an icon, the controller 100 can execute the processing set for the icon.

Note that the UI provider 1022 does not need to display all messages and files. For example, in the case of messages, the UI provider 1022 may provide a display screen that displays a part of the message separately by switching the display screen or scrolling the display screen. The UI provider 1022 may provide a display screen that displays messages as a timeline in chronological order. Similarly, in the case of files, the UI provider 1022 may provide a display screen that displays, for example, a part of the file separately by a folder or the like.

When the user interface is displayed separately for each group, the UI provider 1022 may provide a display screen that displays only messages and files belonging to the group. Here, the UI provider 1022 can provide a display screen for inputting a message and a file as a message and a file belonging to the group currently being displayed from an operation screen or the like. Note that the UI provider 1022 can also provide a display screen that displays, for example, only messages for each group and displays files as a common list display.

Note that in the present embodiment, the UI provider 1022 displays the user interface on the display 240 as a Web screen using a web browser application, but may provide a display screen that displays the user interface using, for example, a dedicated application or the like. In this way, the UI provider 1022 can provide a display screen that manages input/output of user data such as messages and files via the user interface. In addition, the UI provider 1022 may provide a display screen that displays the user interface on the display 240 using a known method.

The file generator 1030 is processing that evaluates a plurality of business processes from messages and files, displays specific processing candidates based on the evaluation, and executes processing to generate a file when the user selects the processing candidate. Here, the evaluation is, for example, an evaluation serving as a criterion for selecting a candidate process that is the most appropriate business process candidate for the business situation. Note that the business situation refers to a situation based on the content of messages related to business or files related to business. As an example, for example, when a message or file indicating that approval is required for purchasing a product is included, approval request is an appropriate business situation, and when a message indicating that approval has been obtained is included, ordering is an appropriate situation. The file generator 1030 will be described later.

The conversation generator 1040 may generate a message and output the message via, for example, the UI provider 1022. The conversation generator 1040 may generate a message based on, for example, a user's message input from the UI provider 1022. When the file generator 1030 displays a prediction of a business process as a processing candidate, the conversation generator 1040 can output a message based on the prediction of the business process by the file generator 1030 via the UI provider 1022.

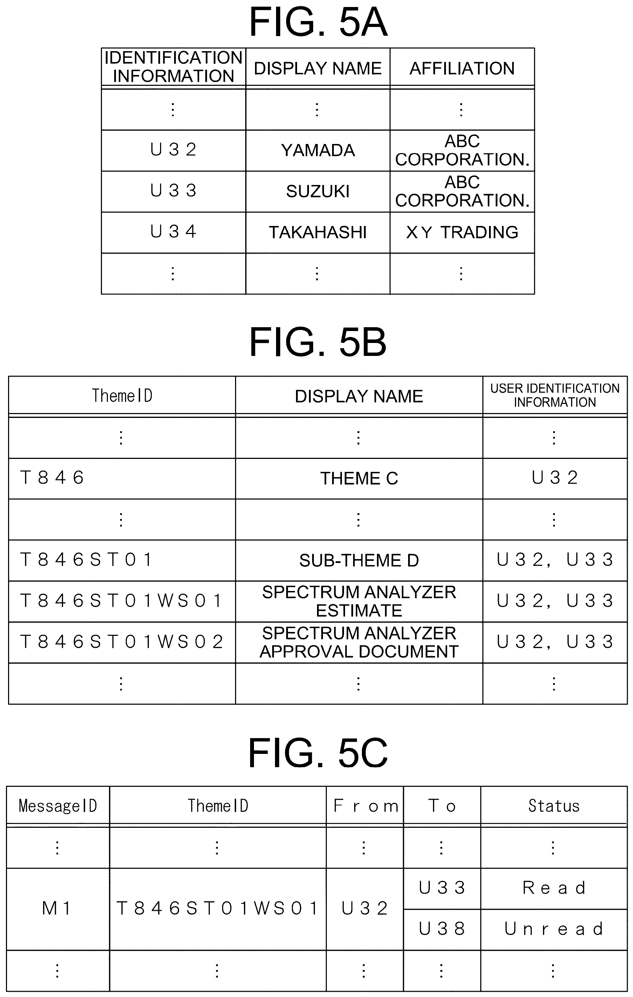

The memory 110 secures a user information storage area 1110 for storing user information. The user information is, for example, information regarding the user, such as user identification information. Here, an example of the user information stored in the user information storage area 1110 will be described with reference to FIG. 5A. The user information stores user identification information uniquely assigned (for example, "U32"), a display name displayed on an interface or the like (for example, "Yamada"), and an affiliation (for example, "ABC Corporation").

Furthermore, the memory 110 secures a theme information storage area 1120. The theme information is, for example, information regarding a theme as an example of group information. The theme information stored in the theme information storage area 1120 may be stored in group units. For example, in the present embodiment, identification information regarding a theme, a sub-theme, and a workspace can be stored.

Here, an example of the theme information stored in the theme information storage area 1120 will be described with reference to FIG. 5B. The theme information stores a ThemeID uniquely assigned as group identification information (for example, "T846ST01WS01"), a display name (for example, "Spectrum Analyzer Quotation"), and user identification information (for example, "U32, U33,"). Note that in the present embodiment, the ThemeID is stored as fixed-length data capable of identifying a group such as a theme, a sub-theme, or a workspace.

In the case of FIG. 5B, for example, the ThemeID "T846" represents "Theme C," which is the upper level of the group. Further, the ThemeID "T846ST01" is represented by adding "ST01," which indicates the sub-theme "Sub-theme D" that is the lower level of the group, to "T846," which indicates the theme "Theme C." Further, the ThemeID "T846ST01WS01" is represented by adding "WS01," which indicates the workspace "Spectrum Analyzer Quotation" that is the lower level of the group, to "ST01," which indicates the sub-theme "Sub-theme D."

In this way, the ThemeID stores the theme, sub-theme, and workspace included in the group, and it is preferable that the theme information is stored so that the upper concept and the lower concept can be distinguished. Further, the theme information may be stored and expressed by linking respective tables indicating attributes. For example, the memory 110 secures, as the theme information storage area 1120, an area for storing themes, an area for storing sub-themes, and an area for storing workspaces. It is preferable that the respective information stored in the theme information is stored using, for example, a link structure so that the upper concept and the lower concept are clarified.

Further, the memory 110 secures a user data storage area 1130 for storing user data. The user data storage area 1130 further secures a file storage area 1132 for storing files and a message storage area 1134 for storing messages.

The file storage area 1132 stores, for example, files such as images, text, and audio uploaded from the terminal device 20, respectively. Here, a unique FileID is assigned to the file as file identification information for identifying the file. As an example, a FileID such as "F1, F2, F3..." may be assigned using, for example, a file name or the like. Furthermore, the file storage area 1132 may, for example, create a folder or the like for each group and store files belonging to the group in the folder.

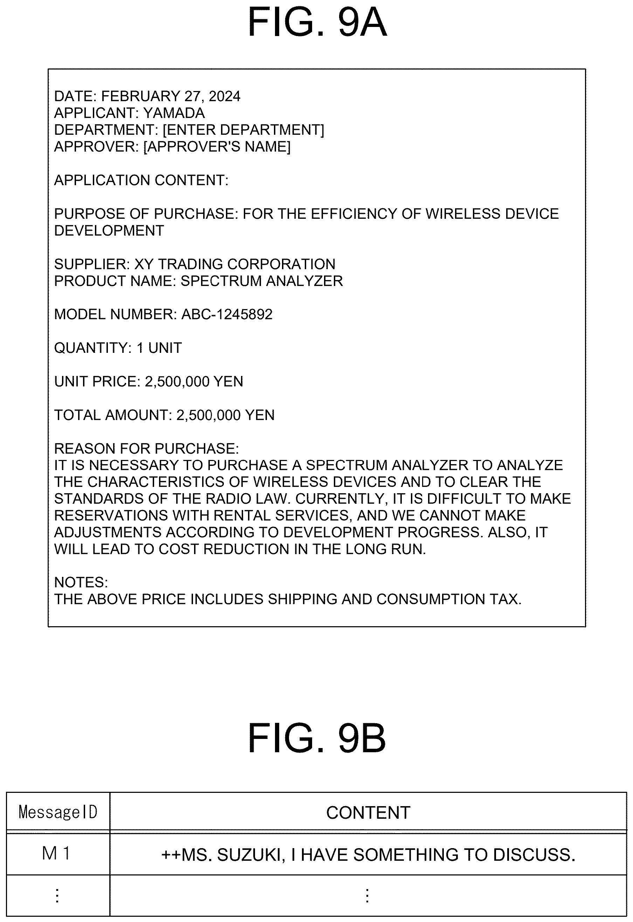

The message storage area 1134 stores, for example, messages posted from the terminal device 20, respectively. Here, an example of messages stored in the message storage area 1134 will be described with reference to FIG. 9B. The message stores a uniquely assigned MessageID (for example, "M1") and the content of the message (for example, "Suzuki-san, I have something to discuss.").

The message storage area 1134 of the memory 110 further secures a message attribute storage area 1136 for storing message attributes. The message attributes are, for example, information on attributes related to messages, such as the source and destination of the message, and whether the message is unread or read. Here, an example of the message attributes stored in the message attribute storage area 1136 will be described with reference to FIG. 5C. The message attributes store a MessageID as message identification information (for example, "M1"), a ThemeID as identification information of the group (for example, theme or workspace) to which the message belongs (for example, "T846ST01WS01"), From indicating the source user identification information (for example, "U32"), To indicating the destination user identification information (for example, U33), and Status indicating whether the message is unread or read (for example, Read).

Here, the Status stores "Unread," which indicates a state where the user has not displayed the message (unread), and "Read," which indicates a state where the user has displayed the message (read). Note that in the present embodiment, the message and the message attributes are stored in different tables, but, for example, the message may be stored as a message file, and the reference destination of the message file may be stored in the message attributes and managed centrally in the message attribute table.

Further, the memory 110 secures a link information storage area 1140 for storing link information. Furthermore, the link information storage area 1140 stores file link information, which indicates the link state of a message to a file, and message link information, which indicates the link state of a message to a file, as information indicating a link state that allows mutual identification.

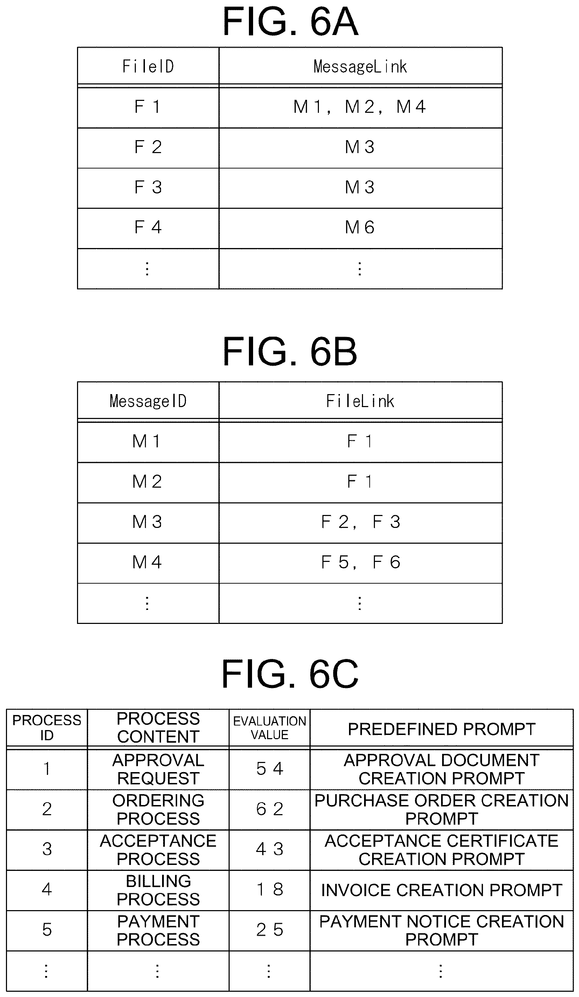

The link information storage area 1140 secures a file link information storage area 1142 for storing file link information. Here, an example of the file link information stored in the file link information storage area 1142 will be described with reference to FIG. 6A. The file link information stores a FileID (for example, "F1"), which is information for identifying a file, and a MessageLink (for example, "M1, M2,"), which is information for identifying a message. Note that the MessageID to be linked is stored in the MessageLink, but, for example, multiple MessageIDs may be stored, or blanks or Null may be stored if no link is established.

The link information storage area 1140 secures a message link information storage area 1144 for storing message link information. Here, an example of the message link information stored in the message link information storage area 1144 will be described with reference to FIG. 6B. The message link information stores a MessageID (for example, "M1"), which is information for identifying a message, and a FileLink (for example, "F1"), which is information for identifying a file. Note that the FileID to be linked is stored in the FileLink, but, for example, multiple FileIDs may be stored, or blanks or Null may be stored if no link is established.

Further, the memory 110 secures a schema storage area 1150 for storing schemas. The schema storage area 1150 stores a schema used for interpreting the file for each file type. Here, the file type refers to a type such as, for example, a quotation, a receipt, or a specification, which can be acquired from the file name, the file content (for example, title, header, tag, etc.) included in the file, and the file attributes. Further, the schema refers to a data format indicating the definition of data attributes and structure. As the schema, various schemas such as, for example, a Json schema, an XML schema, and a CSV schema can be used.

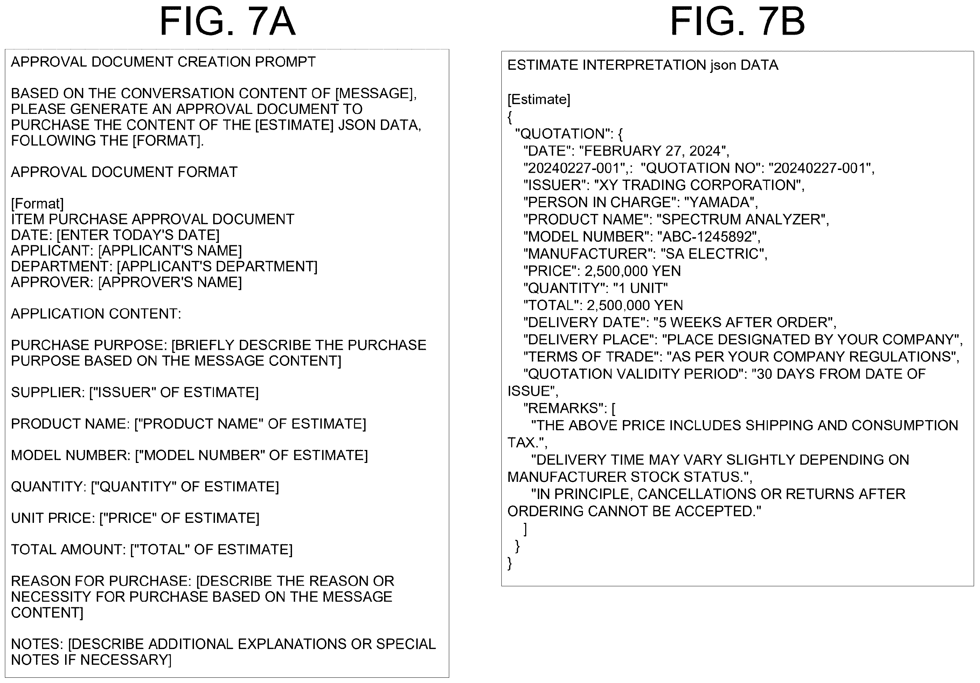

The file storage area 1132 of the memory 110 further secures an interpretation data storage area 1152 for storing interpretation data. The interpretation data is, for example, information obtained by interpreting the file content by mapping it using a schema. Here, an example of the interpretation data stored in the interpretation data storage area 1152 will be described with reference to FIG. 7B. FIG. 7B shows interpretation data obtained by interpreting a quotation file using, for example, a Json schema as an example of file interpretation. The interpretation data stores an attribute defined in the schema (for example, "Date") and a value corresponding to the attribute (for example, "February 27, 2024"). Here, the attribute defined in the schema is a data attribute defined for each schema. For example, in the case of a schema related to a quotation, items used in the quotation, such as "Date," "Quotation No.," and "Quotation Validity Period," may be defined as data attributes. Note that the interpretation data is stored in a format according to the schema defined for each file type.

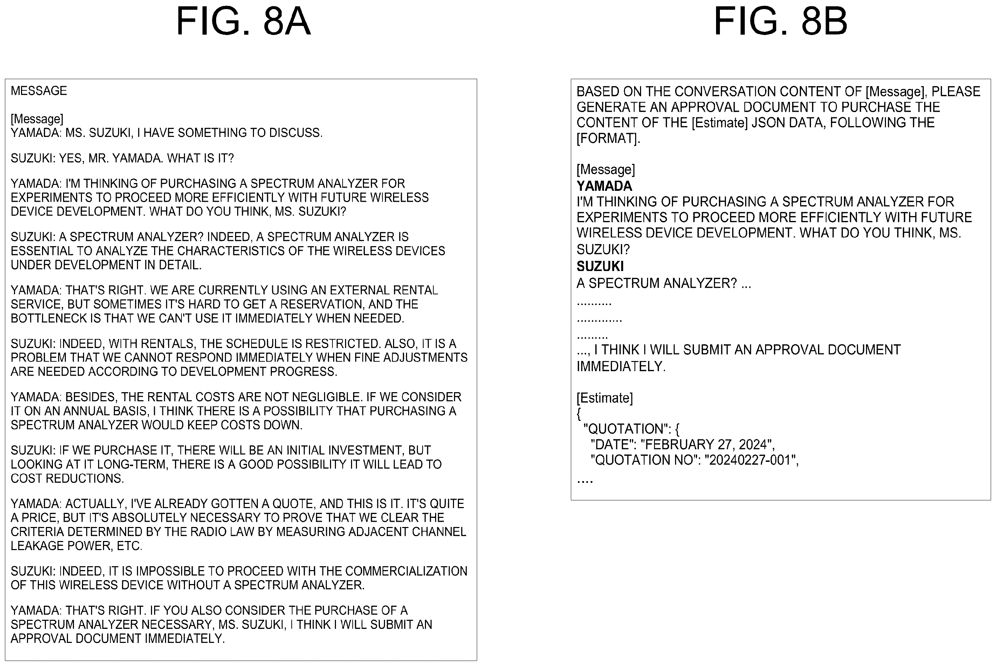

Further, the memory 110 further secures a related message storage area 1154 for storing related messages. The related messages are, for example, information summarizing a message history. It is preferable that the related messages stored in the related message storage area 1154 are stored for each group. Here, FIG. 8A illustrates an example of message attributes stored in the related message storage area 1154. In FIG. 8A, for example, a plurality of messages are stored collectively as one related message.

Furthermore, the memory 110 secures a business process storage area 1160 for storing information on business processes. Here, an example of the information on business processes stored in the business process storage area 1160 will be described with reference to FIG. 6C. The information on business processes stores a processing ID of the business process (for example, "1"), processing content of the business process (for example, "Approval Request"), an evaluation value (for example, "54") as an example of evaluation of the business process based on the message and the file, and a predefined prompt used when executing the business process (for example, "Approval Document Creation Prompt"). Note that the business process storage area 1160 may store information on business processes for each group.

Further, the business process storage area 1160 may store, for example, a list of keywords of phrases related to each business process. For example, for the approval request business process, keywords such as "approval," "circulate for approval," and "get permission" may be stored. Further, the business process storage area 1160 may store evaluation ancillary information as necessary, in addition to the evaluation value. Here, the evaluation ancillary information may include, for example, documents necessary for executing the business process, such as receipts and quotations, individual data such as names and amounts, and evaluation ancillary information such as the presence or absence of approval from a superior.

The business process storage area 1160 secures a predefined prompt storage area 1162 for storing predefined prompts. Note that the predefined prompt is an operation-verified prompt that performs processing based on the schema. Note that the prompt is information for instructing a language model (large language model, small language model) to generate an output sentence. Here, an example of the predefined prompt stored in the predefined prompt storage area 1162 will be described with reference to FIG. 7A. The predefined prompt can be used, for example, to merge input sentences such as interpretation data and related messages, and generate a prompt to be input to the large language model 32. Note that there may be a plurality of predefined prompts. For example, by enriching the predefined prompts, it becomes possible to realize various simple solutions.

It is not limited to prompts for generative AI (for example, the large language model 32, the edge LLM, etc.), and may be code such as a python (registered trademark) script that performs predetermined processing. As described above, an interpretation schema is defined for each file type, and the business processes stored in the business process storage area 1160 are based on the interpretation schema, enabling highly accurate processing by instructions using prompts. Further, since it conforms to a predetermined schema, business processing using a scripting language or code such as python can be executed based on this premise.

Here, the meaning "display" by the first server device 10 may include the first server device 10 transmitting display data (for example, HTML) to the terminal device 20 in response to a request from the terminal device 20, and the terminal device 20 displaying a display screen based on the received display data. Further, the first server device 10 may directly display the display screen by controlling the application of the terminal device 20. In this way, the first server device 10 can control the display of the display screen on the terminal device 20.

### 1.3.2 File generator

Next, the file generator 1030 will be described. Note that in the present embodiment, the processing executor 1080 generates a file using the large language model 32, but other functional units such as the file acquirer 1054, the interpreter 1060, and the evaluator 1070 may perform processing using the large language model 32.

The group manager 1050 acquires user data managed for each group from the user data storage area 1130. Further, here, the group manager 1050 acquires messages included in the user data related to the group. Here, as a method for the group manager 1050 to acquire a file, the group manager 1050 acquires the file based on the group identification information stored in the message attribute storage area 1136.

Further, for example, when a message is newly generated (posted) or a file is newly registered (stored), the group manager 1050 also acquires the file corresponding to the message. Note that the group manager 1050 may acquire one file or a plurality of files. Here, as a method for the group manager 1050 to acquire a file, the group manager 1050 may acquire the file linked to the message from the link destination, or may directly acquire the file from the file storage area 1132.

The message acquirer 1052 acquires messages from the group manager 1050 and creates one related message by summarizing the messages. The message acquirer 1052 stores the related message in the related message storage area 1154. Then, the message acquirer 1052 outputs the related message to the evaluator 1070.

The file acquirer 1054 acquires a file from the group manager 1050. The file acquirer 1054 outputs the acquired file to the interpreter 1060. Further, the file acquirer 1054 outputs necessary information to the schema acquirer 1062 in order for the interpreter 1060 to specify the schema to be used.

The file acquirer 1054 outputs the file type as necessary information. For example, the file acquirer 1054 specifies the file type as "Quotation" and outputs it to the schema acquirer 1062. Note that, in order to specify the file type, the file acquirer 1054 may, for example, pass (input) a file type list and the file to a generative AI (for example, the large language model 32) to have the file type determined (specified). Specifically, the file acquirer 1054 may pass the file to the generative AI, add a list of file types to the prompt, and give (input) a prompt such as, for example, "Interpret the specified file and select the corresponding file type if it exists in the list" to the generative AI to specify the file type.

Alternatively, the file acquirer 1054 may acquire and use information based on the file content (phrases) from the interpreter 1060. Further, the interpreter 1060 may specify the file type by character-recognizing the file. Further, the interpreter 1060 may specify the file type from the file name.

The schema acquirer 1062 acquires the schema to be used by the interpreter 1060 from the schema storage area 1150 based on the information (file type) output by the file acquirer 1054. Then, the schema acquirer 1062 outputs the acquired schema to the interpreter 1060.

The interpreter 1060 interprets the file output by the file acquirer 1054 using the schema output by the schema acquirer 1062. Specifically, the interpreter 1060 may pass the file to the generative AI, add the corresponding schema corresponding to the file type specified by the file acquirer 1054 to the prompt, and give a prompt such as, for example, "Interpret the specified file and describe it according to this schema" to the generative AI.

Alternatively, the interpreter 1060 recognizes and specifies phrases from the file that correspond to attributes using a schema defined according to the file type by the following method. The interpreter 1060 may include, for example, a language recognizer that performs recognition by analyzing a sentence when the file includes the sentence, or may use an image recognizer to recognize characters/phrases when the file is an image.

Further, when the interpreter 1060 specifies an attribute, it acquires a value corresponding to the specified attribute from phrases included in the file. Thereby, the interpreter 1060, which includes a combination of an attribute and a value, interprets, for example, the phrase "February 27, 2024" from the phrases included in the file as a "value" corresponding to the attribute "Date," and outputs it.

The interpretation data outputter 1064 outputs the interpretation data output by the interpreter 1060 to the evaluator 1070. Further, the interpretation data outputter 1064 outputs the interpretation data to the processing executor 1080 as necessary. Note that the interpretation data outputter 1064 may store, for example, the interpretation data in the interpretation data storage area 1152.

The business process acquirer 1072 acquires a business process from the business process storage area 1160 and outputs the acquired business process to the evaluator 1070.

The evaluator 1070 evaluates the business process output from the business process acquirer 1072. The evaluator 1070 evaluates the business process from the business situation based on the related message output by the message acquirer 1052 and the interpretation data output by the interpretation data outputter 1064, and outputs the result to the processing candidate outputter 1074.

The processing candidate outputter 1074 acquires the evaluation for each business process from the evaluator 1070, and outputs an appropriate processing candidate for the business situation based on the evaluation. The processing candidate outputter 1074 outputs the processing candidate based on the evaluation to the conversation generator 1040. The processing candidate outputter 1074 transmits display information including the message output by the conversation generator 1040 and the processing candidate to the terminal device 20. The terminal device 20 displays the conversation and the business process corresponding to the processing candidate on the display 240 based on the display information. Further, the processing candidate outputter 1074 outputs the processing candidate, which has been output to the display 240 of the terminal device 20, to the processing receiver 1076.

The processing receiver 1076 acquires the business process received from the operation acceptor 250 among the business processes displayed on the display 240 of the terminal device 20, and outputs it to the processing executor 1080.

The processing executor 1080 outputs the related message, the file interpretation data, and the predefined prompt as an input sentence to the large language model 32, and acquires an output sentence from the large language model 32. Here, the output sentence may be output as a file such as, for example, a processing file. Thereby, the processing executor 1080 can realize the execution of the business process with the input sentence based on the user data such as the message and the file, and the output sentence.

Specifically, the processing executor 1080 includes a prompt generator 1082 and a processing file acquirer 1084.

The prompt generator 1082 generates a prompt to be input to a language model (for example, the large language model 32) based on the input information (input sentence). Here, the prompt may be in a predetermined format using a schema or in a natural language format. FIG. 8B is a diagram illustrating an example of a prompt generated by the prompt generator 1082. In this way, the prompt generator 1082 can generate a prompt based on, for example, the related message, the file interpretation data, and the predefined prompt by merging them.

The prompt generator 1082 may generate a prompt to be input to the large language model 32 by, for example, inputting the above-described information to the edge LLM once.

The processing executor 1080 (the prompt generator 1082) inputs the prompt including the input sentence to the large language model 32 of the second server device 30 as an example of the language model. The large language model 32 outputs a processing file as an output sentence to the processing executor 1080 according to the input prompt. Note that, although the large language model 32 located in the second server device 30 is used, when it is stored in the memory 110, the controller 100 can also use the one stored in the memory 110.

The processing executor 1080 (the processing file acquirer 1084) acquires the processing file from the large language model 32. Here, FIG. 9A is a diagram illustrating an example of a processing file acquired as an output sentence according to the result of the processing executor 1080 inputting the prompt including the input sentence to the large language model 32 of the second server device 30. The processing executor 1080 outputs the processing file to, for example, the processing file outputter 1090.

The processing file outputter 1090 outputs the processing file acquired from the processing executor 1080 by storing it in, for example, the file storage area 1132.

### 1.4 Flow of Processing

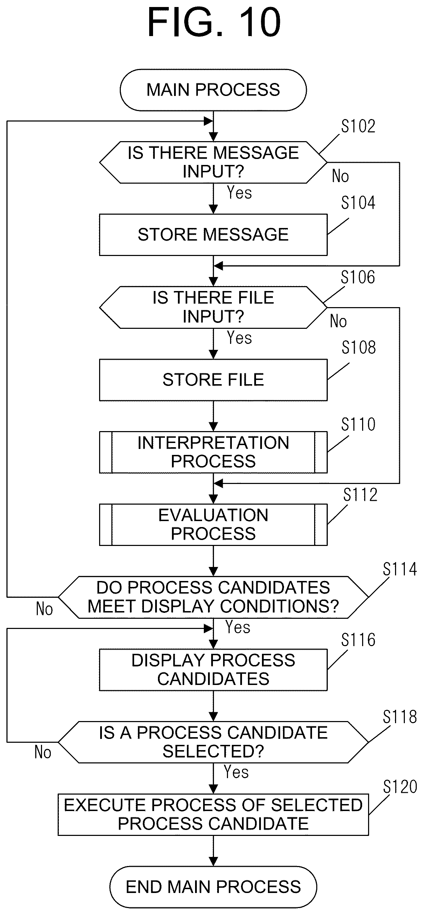

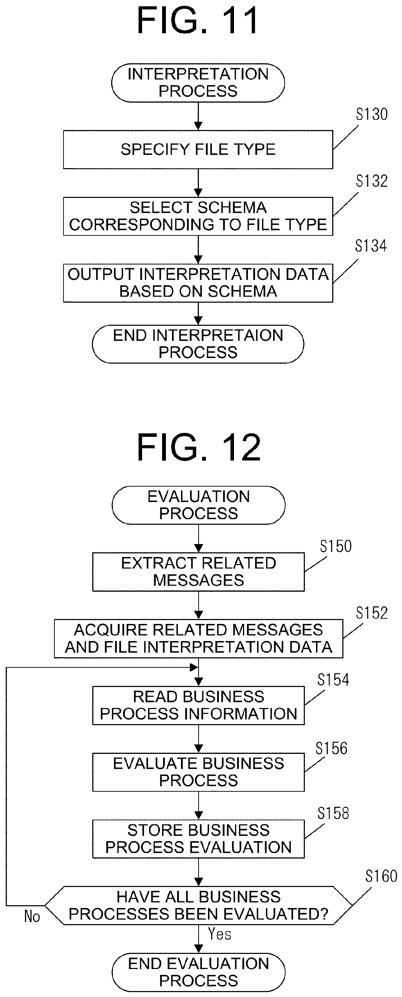

Hereinafter, the flow of processing in the present embodiment will be described. FIG. 10 is a diagram illustrating a flow of main process of the first server device 10, FIG. 11 is a diagram illustrating a flow of interpretation process, and FIG. 12 is a diagram illustrating a flow of evaluation process.

Note that, although the following processing will be described as being executed by the controller 100 of the first server device 10, each configuration described with reference to FIGs. 3 and 4 may execute the processing of each step.

### 1.4.1 Flow of Main process

First, the controller 100 determines whether a message has been input from the terminal device 20 (S102). For example, when the controller 100 receives a message from the terminal device 20, the controller 100 determines that a message has been input by the terminal device 20, and stores the message in the message storage area 1134. Further, the controller 100 stores the user identification information corresponding to the message in the message attribute storage area 1136 (S102; Yes -> S104).

Next, the controller 100 determines whether a file has been input (S106). Note that, when no message has been input from the terminal device 20, the controller 100 similarly determines whether a file has been input (S102; No -> S106). For example, when the controller 100 receives a file from the terminal device 20, the controller 100 determines that a file has been input by the terminal device 20, and stores the file in the file storage area 1132 (S106; Yes -> S108). Further, the controller 100 may store the user identification information corresponding to the file in the file storage area 1132. Subsequently, the controller 100 performs interpretation process on the file (S110). Here, the interpretation process is executed by the interpreter 1060 in FIG. 4, and details of the processing will be described later.

The controller 100 executes evaluation process (S112). Here, the evaluation process is, for example, processing that performs evaluation regarding the business situation for each business process. Details of the evaluation process executed by the controller 100 will be described later. Note that the controller 100 may evaluate the evaluation with, for example, a numerical value such as an evaluation value. Further, the controller 100 may perform evaluation with a stepwise evaluation such as, for example, an A determination or a B determination, or a rating or rank, which is given when a certain condition is met. Furthermore, the controller 100 may output evaluation ancillary information in addition to the numerical value such as the evaluation value. Note that this processing performs evaluation based on the message history and file group in the group where the message was input or updated, or the file was input or updated. Note that it is more preferable to evaluate one or more upper groups to which the group belongs.

Next, the controller 100 determines whether a display condition for processing candidates is met based on the result of evaluating each business process described above (S114). For example, when an evaluation value is output based on the evaluation of the business process in the evaluation process, the controller 100 sets a business process whose evaluation value exceeds a threshold value as a processing candidate. Then, when a predetermined number of processing candidates are extracted, the controller 100 may determine that the display condition for processing candidates is met.

Further, for example, when the business processes are evaluated stepwise, the controller 100 may determine that the display condition for processing candidates is met and set them as processing candidates when a predetermined rating or rank, which is a threshold value, is reached. Furthermore, in addition to these conditions, the controller 100 may determine that the display condition for processing candidates is met when, for example, a message with specific content is input, a certain number or more of messages are input, or at least a file is input.

When the display condition for processing candidates is met, the controller 100 displays, for example, the processing candidates (S114; Yes -> S116). For example, the controller 100 may display a list of processing candidates corresponding to the evaluation on the terminal device 20, and cause the user to select a processing candidate from the list display. Further, the controller 100 may display choices of processing candidates. Furthermore, the controller 100 may display, for example, the processing candidates together with a message on the display 240.

Further, the controller 100 may, for example, specify one business process from among the candidate business processes and display it identifiably on the display 240. As the identifiable display, the controller 100 may display only one business process to be performed next, or may identifiably display only one of a plurality of displayed processing candidates. Here, the controller 100 may display the message displayed together with the processing candidates as, for example, a message from an avatar (AI) on the same timeline.

On the other hand, when the display condition for processing candidates is not met, the controller 100 determines again whether a message has been input (S114; No).

Next, the controller 100 determines whether a processing candidate has been selected by the user (S118). Here, when a processing candidate has been selected by the user, the controller 100 executes the business process of the selected processing candidate (S118; Yes -> S120). When no processing candidate has been selected (S118; No -> S116), the controller 100 may continue to display the processing candidates.

Note that the operation flow described above is an example, and partially different processing may be performed. In S118, when no processing candidate has been selected by the user, the controller 100 may display, for example, a notification inquiring whether "the processing candidate is not the desired processing candidate." Next, when "not the desired processing candidate" is selected in the notification, the controller 100 may perform processing of reducing the evaluation value for the processing candidate by a predetermined amount and returning to S102.

Furthermore, in the present embodiment, there is one threshold value, but there may be a plurality of threshold values. For example, when the evaluation value of a processing candidate exceeds a first threshold value, the controller 100 displays the processing candidate in S116, and when the processing candidate is selected in S118, executes the processing candidate as a business process in S120.

On the other hand, for example, when the evaluation value of a processing candidate exceeds a second threshold value, which is smaller than the first threshold value, the controller 100 displays it as a processing candidate in a list in S116. Next, when the processing candidate is selected in S118, the controller 100 may perform processing of presenting documents and actions (obtaining permission from a superior, inputting documents and information) necessary for the business process to be performed next based on the ancillary information accompanying the evaluation. Here, the ancillary information accompanying the evaluation may be information obtained by back-calculating the documents and actions necessary for the business process required for the evaluation value to exceed the first threshold value.

In this way, by displaying a list of processing candidates, for example, when the user selects one of the processing candidates, it becomes possible to identify the business process to be performed next based on the evaluation of the processing candidate, and to present the documents and actions necessary for the business process to be performed next.

### 1.4.2 Flow of Interpretation process

The interpretation process executed in S110 of FIG. 10 will be described. The controller 100 specifies the file type (S130). Here, the controller 100 may specify the file type based on, for example, the file name. Further, the controller 100 recognizes the content of the file (for example, phrases, numerical values, images, etc. also included in the file), and specifies the file type based on the recognition result. Further, the controller 100 may specify the file type from the file extension. Alternatively, the controller 100 may pass the file to a generative AI, add a list of file types to the prompt, and give a prompt such as, for example, "Interpret the specified file and select the corresponding file type if it exists in the list" to the generative AI to specify the file type.

Next, the controller 100 selects a schema corresponding to the file type (S132). For example, if the file name includes the characters "Receipt," the controller 100 selects a schema corresponding to "Receipt." Further, if the file content includes "Quotation" or characters/phrases frequently used in quotations, the controller 100 selects a schema corresponding to "Quotation" from the schema storage area 1150. Note that the controller 100 may, for example, cause the user to specify the file type by displaying a preview of the file, or may cause the file type to be specified by inputting the file to a trained model such as an LLM or an edge model. Note that, for file types for which legal requirements are stipulated, such as receipts, it is desirable that the schema is defined to include specified elements such as date, amount, and addressee.

Next, the controller 100 interprets the file using the schema corresponding to the file type, and outputs interpretation data (S134). Here, since the schema corresponding to the file type is used, it is possible to appropriately interpret attributes and values corresponding to the attributes according to the file type. For example, when "Total 100,000 yen" is included in the file as the total amount, if the "Quotation" schema is used, the amount is interpreted as the value of "Quotation Amount." Further, if the "Invoice" schema is used, the amount is interpreted as the value of "Invoice Amount." The controller 100 stores and outputs, for example, the generated interpretation data in, for example, the interpretation data storage area 1152.

### 1.4.3 Flow of Evaluation process

The evaluation process executed in S112 of FIG. 10 will be described. The controller 100 extracts related messages and stores them in the related message storage area 1154 (S150). Here, as the related messages, for example, when a workspace is selected by the user, the messages in the corresponding workspace may be extracted and stored as related messages. Further, when a theme (sub-theme) is selected by the user, the messages in the workspace included in the corresponding theme (sub-theme) may be extracted and stored as related messages. That is, as the group, when a lower concept (workspace) is selected, only the messages and files of that lower concept may be evaluation targets. Further, as the group, when an upper concept (theme, sub-theme) is selected, the messages and files including that lower concept may be evaluation targets.

The controller 100 acquires related messages from the related message storage area 1154, and acquires file interpretation data from the interpretation data storage area 1152 (S152). Here, as for the target file, similarly to the above, when the selected target is a workspace, only the files included in the workspace may be targeted. Further, when the selected target is a theme, the workspaces included in the theme may be targeted. In this way, this evaluation process can target only those included in a specific group for evaluation, or can target those including lower concepts (or those included in the group) for evaluation. Further, the controller 100 may acquire the file itself together with the file interpretation data, or may acquire the file, instead of only the file interpretation data.

Next, the controller 100 reads information on the business process to be evaluated from the business process storage area 1160 (S154).

Subsequently, the controller 100 evaluates the business process (S156). For example, the controller 100 evaluates the business process based on the related messages, the file interpretation data, and the information on each business process. Possible evaluation methods include the following. Note that, in S152, the file interpretation data may include the file itself together with the file interpretation data. Further, instead of the file interpretation data, it may be the data of the file itself.

As a first method, a method may be used in which the messages, file interpretation data, and information on each business process in each group are input as a prompt to a generative AI to obtain an evaluation value for each business process. In that case, the controller 100 may input several scoring examples as few-shot learning into the prompt and input them to the generative AI to obtain the evaluation value, so that the evaluation score does not vary each time. Alternatively, the controller 100 may perform fine-tuning on the generative AI to learn many examples of evaluation values for various business processes in various situations (business situations) to obtain the evaluation value. Here, the group information included in the prompt may be information on a single group (for example, theme, sub-theme, workspace), or may include information on lower concepts. For example, all messages and the like in the workspaces included in the lower level of the selected theme may be output to the prompt.

As a second method, a method using a list of phrases related to business processes may be used. The controller 100 reads, for example, a list including phrases related to each business process as information on the business process read from the business process storage area 1160. Next, the controller 100 compares the list with phrases included in the related messages and interpretation data, and evaluates the business process based on, for example, the proportion of phrases related to the business process included. The controller 100 evaluates that the more phrases related to the business process are included in the related messages and interpretation data, the more the business process is in line with the business situation, and may, for example, calculate a higher evaluation value for the business process or set a higher rank evaluation.

As a third method, a method may be used in which a plurality of conditions, such as whether information necessary for executing the business process exists, are determined, and the business process is evaluated as being in line with the business situation based on the proportion of conditions met. As an example of the conditions, the controller 100 may determine, for example, a condition such as whether a file necessary for the business process has been uploaded. For example, when generating a bill of materials (BOM), the controller 100 may determine that the condition is met when a plurality of "Quotation" files have been uploaded.

Further, the controller 100 may, for example, analyze the related messages using a language recognizer, and determine that the condition is met when a specific phrase is included in a file related to the business process or a reply message to the message. For example, regarding acceptance processing, the controller 100 may determine that the condition is met when a "Delivery Note" file related to the acceptance processing is uploaded and a message such as "There are no shortages in the delivered items" is included. As an other example, the controller 100 may determine that the condition is met when, for example, a reply message to a user's posted message such as "I want to circulate this for approval" or a message immediately after that includes a phrase such as "Agree."

Furthermore, the controller 100 reads a predefined prompt corresponding to the business process from the business process storage area 1160. Next, the controller 100 generates a prompt by merging the predefined prompt, the related messages, and the interpretation data. Subsequently, the controller 100 may determine whether a specific item in the prompt has been input, and determine that the condition is met when a value has been input in the item.

As a fourth method, a method using various techniques such as a machine learning model or a deep learning model is also conceivable. The controller 100 may perform evaluation by inputting related messages and interpretation data, respectively, to a trained model that has learned message and file patterns for each business process.

Note that when inputting messages to the generative AI, the tokens may become long and subject to limitations. Therefore, it is preferable to limit the messages input to the generative AI to messages within a predetermined period, or to summarize the messages for each predetermined period and input them to the generative AI, or further, to summarize messages older than the predetermined period and input them to the generative AI, so as not to exceed the token length.

Further, when inputting file interpretation data to the generative AI, the tokens may become long and subject to limitations. Therefore, it is preferable to store the interpretation data of each file in a vector database, perform RAG-based filtering based on the messages, and ensure that the token length is not exceeded.

Here, as the machine learning model, techniques such as a support vector machine, a random forest, and a K-nearest neighbors algorithm may be used. Further, as the deep learning model, techniques such as a convolutional neural network (CNN) and a recurrent neural network (RNN) may be used.

Further, the controller 100 may create a vector database of message and file patterns for each business process using, for example, Word2vec or the like. Next, the controller 100 may similarly vectorize and compare the related messages and the interpretation data, and perform evaluation based on the proportion of similarity of the vectors.

Furthermore, a method using RAG for evaluation is also conceivable. The memory 110 stores, for example, information on characteristic messages and files for each business process as knowledge information. Then, the controller 100 may input the related messages and the interpretation data together with the knowledge information to the large language model 32 to evaluate the business process.

Note that it is preferable that the evaluation for the business process is performed for each group. For example, in the present embodiment, it may be performed for each workspace. In that case, since the file interpretation data and the related messages are summarized for each group, prediction with higher accuracy becomes possible. Further, each file is assigned interpretation data obtained by interpreting the file using a schema corresponding to the file type. The controller 100 combines the interpretation data and the related messages, thereby compressing the context information to a level that allows prompt learning by the generative AI.

Further, the evaluation for the business process may be performed for each user. The controller 100 evaluates the business process based on, for example, the analysis result of messages originating from the user, messages destined for the user, and files linked to the messages.

Next, the controller 100 stores the evaluation for the business process in the business process storage area 1160 (S158). Subsequently, the controller 100 determines whether all business processes have been evaluated (S160). Here, the controller 100 may determine that all business processes have been evaluated when information on all business processes has been read from the business process storage area 1160 and there is no business process to be read.

When all processing candidates have been evaluated, the controller 100 ends the processing (S160; Yes). For example, when information on a business process can be read from the business process storage area 1160, the controller 100 reads information on the business process to be evaluated next from the business process storage area 1160 (S160; No -> S154).

### 1.5 Operation Example

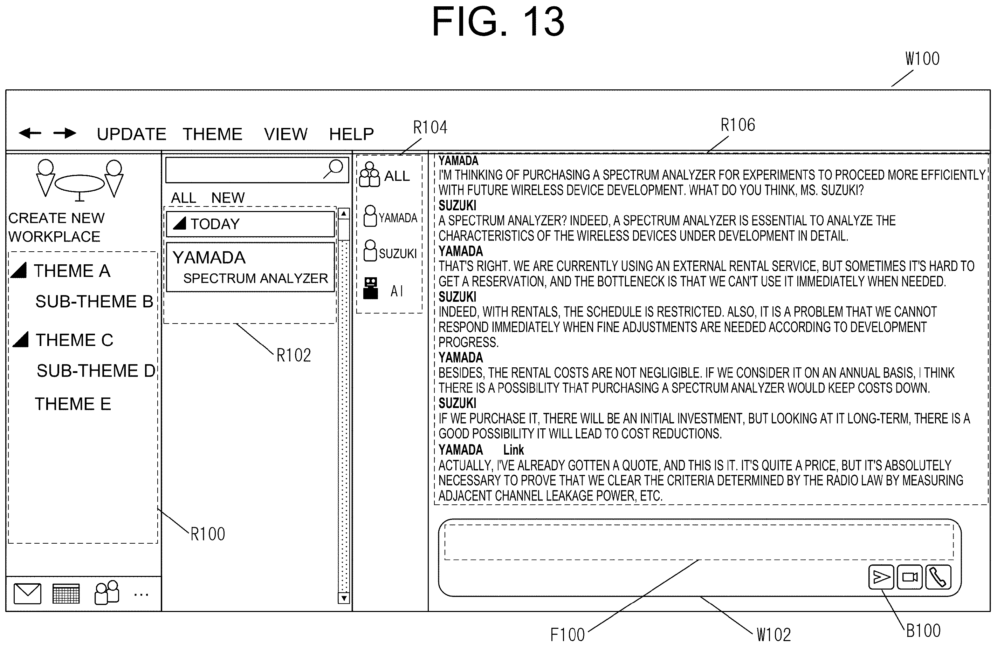

FIG. 13 to FIG. 19 are diagrams illustrating an example of the operation of the terminal device 20 in the present embodiment. In a display screen W100 in FIG. 13, a theme display area R100 for displaying themes as an example of groups, a workspace list display area R102 for displaying a list of workspaces included in a selected theme (or sub-theme), a user display area R104, and a message display area R106 are secured, and a window display W102 is displayed.

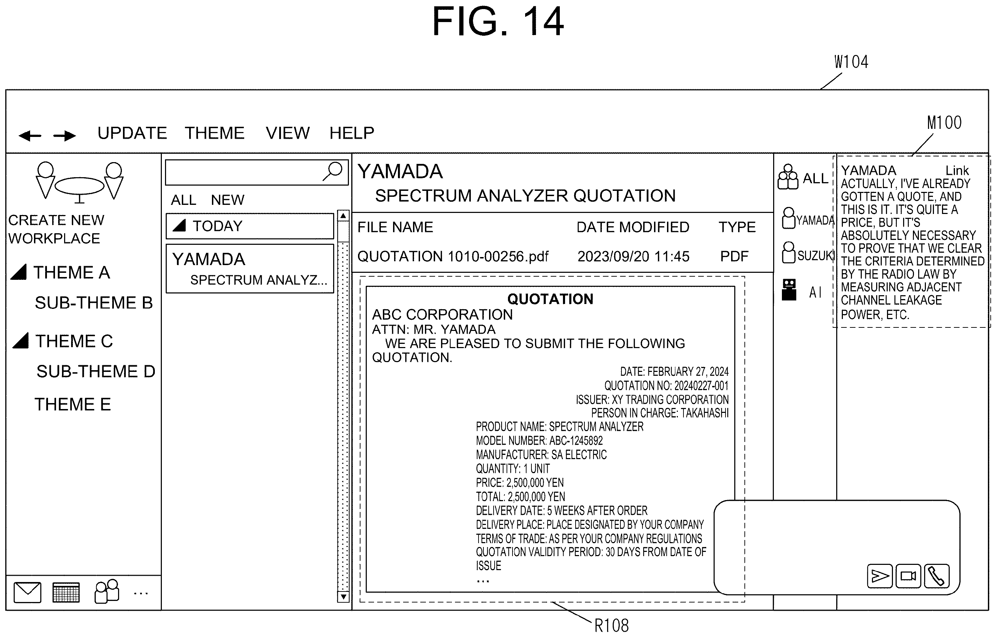

In the theme display area R100, Theme A, Theme C, and Theme E are displayed. Further, Sub-theme B and Sub-theme D are also displayed. Further, in the workspace list display area R102, a workspace "Yamada Spectrum Analyzer" is displayed as a workspace. Furthermore, in the user display area R104, icons capable of identifying users, such as "All," "Yamada," "Suzuki," and "AI," are displayed, respectively. In the message display area R106, posted messages posted by users are displayed as a timeline in chronological order, and in a window display W120, a message form F100 and a send button B100 are displayed. Here, when the user inputs a message into the message form F100, selects a file to be attached to the message, and selects the send button B100, the controller 100 displays a display screen W104 in FIG. 14 on the display 240.

On the display screen W104 in FIG. 14, a user's posted message M100 "Yamada Link Actually, I've already gotten a quotation, and this is it. It costs a lot, but it's absolutely necessary to measure adjacent channel leakage power and prove that it clears the standards set by the Radio Law, right?" from FIG. 13 is displayed, and a file preview display area R108 for displaying the quotation file is secured.

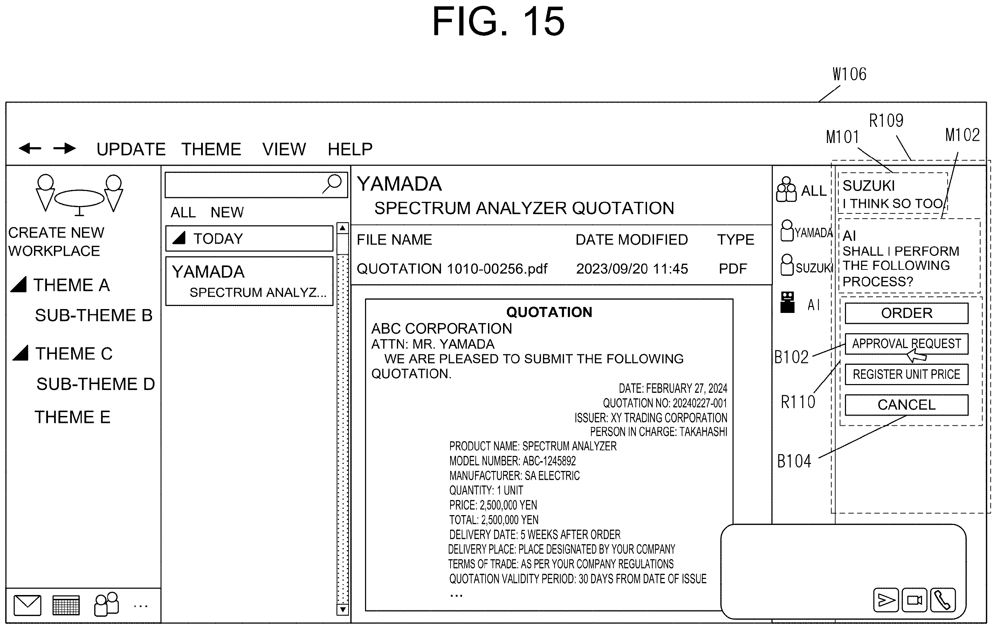

FIG. 15 is a diagram illustrating an example of the operation of the terminal device 20 when, on the display screen W104 in FIG. 14, a user's posted message including agreement from an other user is received, and the controller 100 evaluates executable business processes based on the message and the file. Here, the controller 100 evaluates executable business processes based on the message and the uploaded file.

On a display screen W106 in FIG. 15, a message display area R109 is secured. Here, in the message display area R109, a posted message M101 including agreement from an other user "Suzuki I think so." and a message M102 from AI "AI Do you want to perform the following processing?" are displayed, and a processing candidate display area R110 for displaying choices of a plurality of business processes as processing candidates is secured and displayed as a timeline in chronological order. Here, the display of the message M102 from AI may be, for example, a display via an avatar.

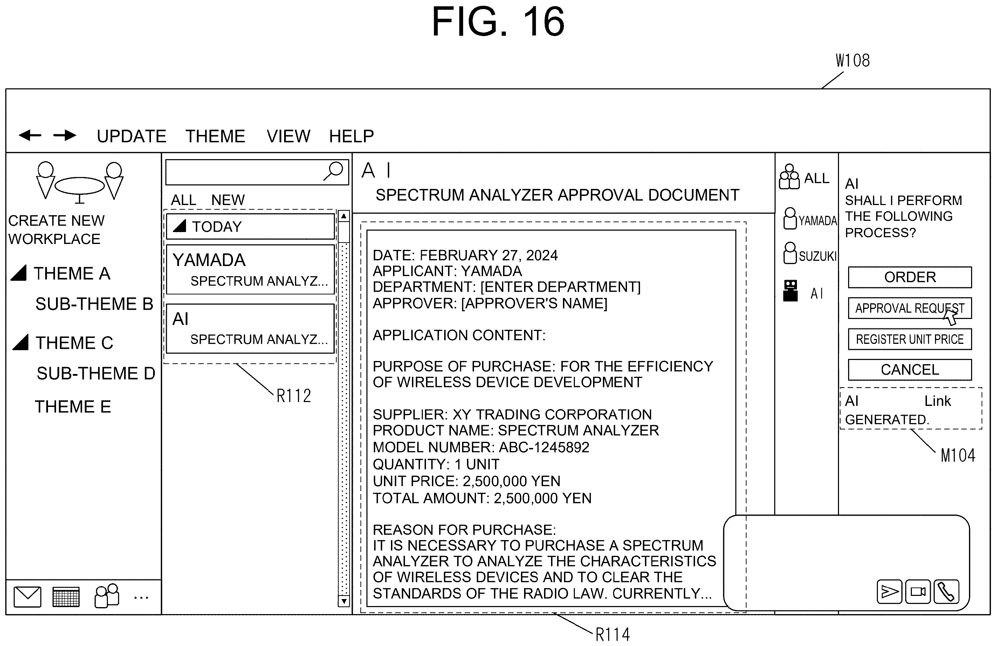

In the processing candidate display area R110, for example, an approval request button B102, a cancel button B104, and other selectable business processes are displayed as choices. Here, when the user selects the approval request button B102, the controller 100 executes the business process corresponding to the approval request button B102, which is the business process for creating an approval document, and displays, for example, a display screen W108 in FIG. 16. On the other hand, when the user selects the cancel button B104, the controller 100, for example, invalidates the selection in the processing candidate display area R110 and cancels the processing.

Note that in the present embodiment, the posted message M101 is displayed on the timeline in the message display area R109, respectively, and the processing candidate display area R110 is secured. Here, the controller 100 may, for example, switch the screen to display the message M102, secure the processing candidate display area R110, and display only the plurality of business processes as processing candidates in the processing candidate display area R110. In this case, it is possible to make the user aware that the business process has become executable.

On a display screen W108 in FIG. 16, a workspace list display area R112 in which a new workspace generated by AI is displayed, and a preview display area R114 for preview-displaying the generated file are secured. Furthermore, on the display screen W108, a message M104 from AI "AI Link Generated." is displayed.

In this way, the controller 100, for example based on the interpretation of the business situation, such as the user's message and the uploaded file, allows, for example, the language model to actively propose, for example, the specific business process to be performed next to the user. This enables the utilization of LLM based on communication and related data.

In this way, the controller 100 can identify the business process to be performed next by the user based on the analysis result of the message and the file, and present the identified business process to the user in an identifiable manner. The user can accept the execution of the presented business process and execute the processing.

Further, when there is insufficient information to execute the business process for creating an approval document, and the user selects the approval request button B102, if, for example, a quotation is missing, the controller 100 may execute processing of displaying a message such as "A quotation seems to be missing. Please upload the quotation." instead of the message M104 in FIG. 16. This allows the user to grasp the current progress of the business process they desire.

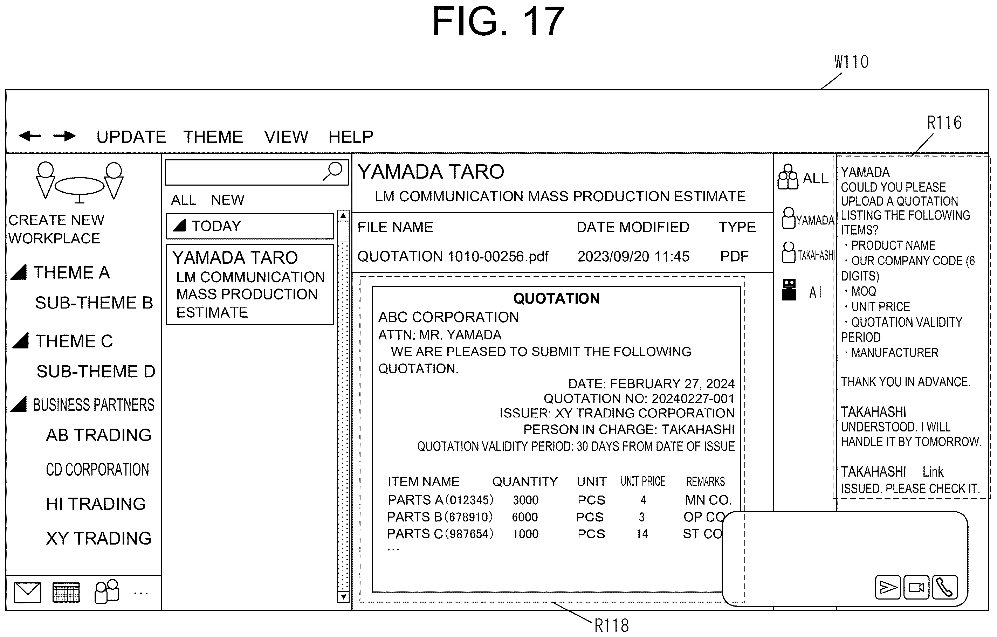

FIG. 17, FIG. 18, and FIG. 19 are diagrams illustrating an other example of the operation of the terminal device 20 in the present embodiment. On a display screen W110 in FIG. 17, a message display area R116 including messages requesting quotations to collect quotations from various companies, and a preview display area R118 for preview-displaying the requested quotation file that has been uploaded are secured.

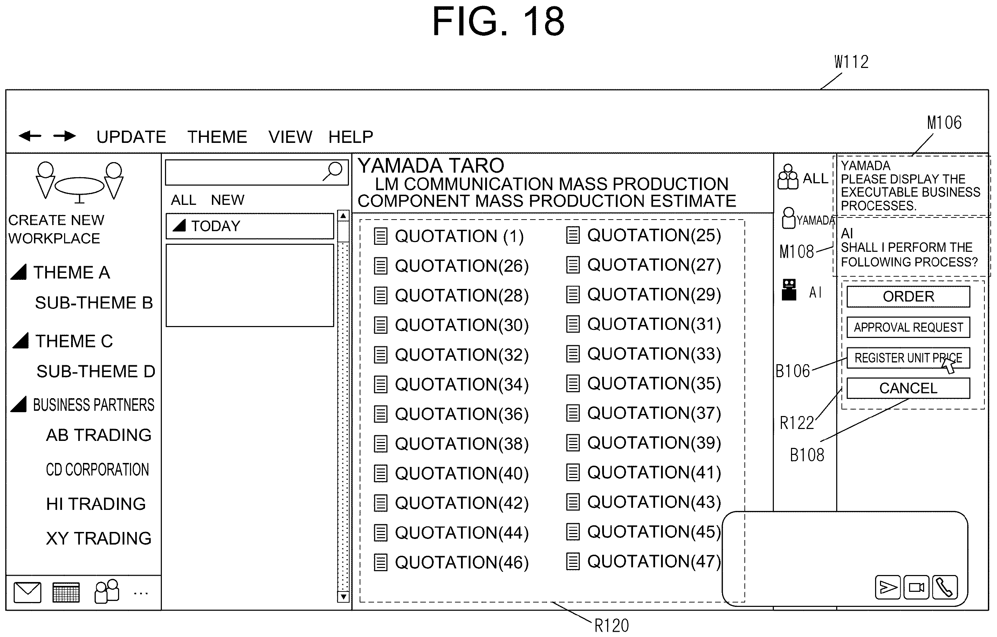

FIG. 18 is a diagram illustrating an example of the operation of the terminal device 20 as a result of the user inputting a message inquiring to AI about executable business processes based on the uploaded file. On a display screen W112 in FIG. 18, a file display area R120 for displaying the uploaded quotation is secured, and a message M106 input by the user requesting processing from AI "Yamada Please display executable business processes." is displayed.

On the display screen W112, furthermore, a message M108 "AI Do you want to perform the following processing?" displayed on the display 240 by the controller 100 is displayed, and a processing candidate display area R122 for displaying choices of business processes as processing candidates is secured. In the processing candidate display area R122, for example, a unit price registration button B106 and a cancel button B108 are further displayed. Here, when the user selects the unit price registration button B106, the controller 100 executes the business process corresponding to the unit price registration button B106, which is the business process for creating a BOM list for unit price registration, and displays, for example, a display screen W114 in FIG. 17. On the other hand, when the user selects the cancel button B108, the controller 100, for example, invalidates the selection in the processing candidate display area R122 and cancels the processing.

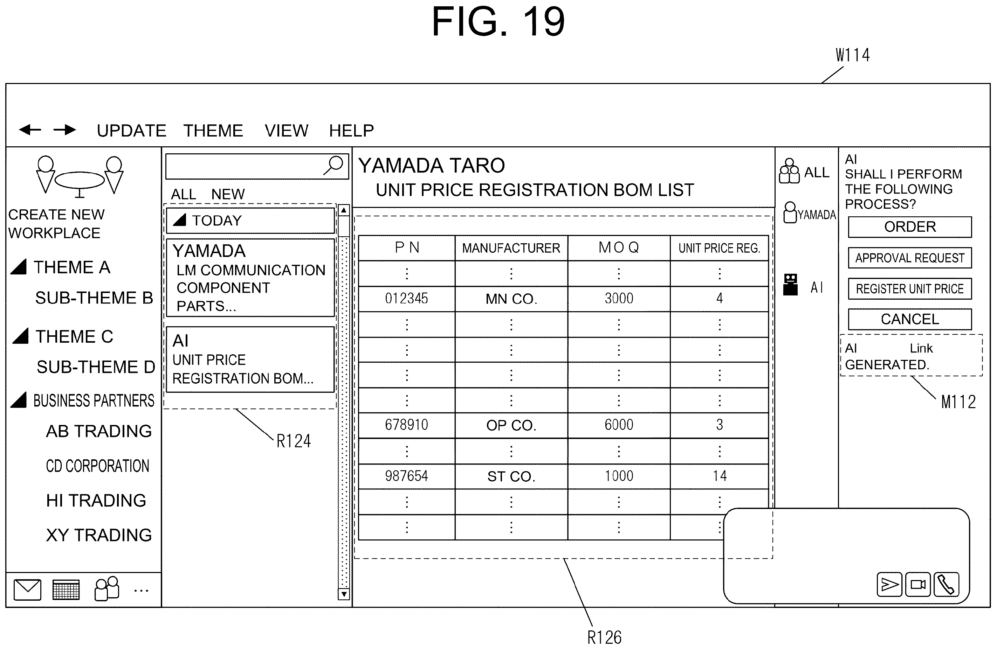

On a display screen W114 in FIG. 19, a workspace list display area R124 in which a new workspace generated by AI is displayed, and a preview display area R126 for preview-displaying the generated file are secured, and a message M112 "AI Link Generated." is displayed. In this way, for example, a business process such as creating a PSI management BOM list, which used to take several tens of man-days, can be processed in about one man-day. The controller 100, for example based on the interpretation of the business situation, such as the user's message and the uploaded file, allows the user to inquire to the language model at an arbitrary timing and receive proposals for executable business processes.

In this way, the controller 100 defines a schema for structuring and interpreting the content according to the type of data (file), and can, for example, manage interpretation information, which is obtained by having an LMM interpret the data once according to the schema, in association with the original data. Further, the controller 100 can store a group of operation-verified prompts that allow an LLM to perform predetermined processing (business processing) based on structured information obtained by structuring the content according to the data type. Furthermore, the controller 100 can calculate the priority (evaluation value) of data processing and perform data processing (business processing) based on the relationship between data (files) and communication (messages). This enables advanced business support that takes into account the content of communication.

### 1.6 Effects, etc.

According to the present embodiment, it is possible to provide an information processing system or the like capable of evaluating an optimal business process based on a message and a file to improve a user's business processing efficiency and productivity. The user can execute the business process at the timing when it becomes executable, and can efficiently automate the business.

Further, file management and message management can be integrated by groups such as themes, channels, teams, projects, businesses, and enterprises. Since files and messages are summarized for each group, it becomes possible to accurately machine-interpret the situation of each theme based on the interpretation data of messages and files for each group. For files, by defining interpretation schemas for various files and utilizing the interpretation data, it is possible to save prompt length and accurately machine-interpret the situation. By defining interpretation schemas for various files and using element names defined in the schemas in predefined prompts, more accurate data processing by generative AI becomes possible. Further, various business processes can be reliably performed by scripts such as python based on the definition by the schema.

### 1.7 Modifications

Note that, in the description of the above-described embodiment, an example has been described in which messages using a timeline are displayed and exchanged. However, it is sufficient to acquire messages and files, and, for example, the messages may be hidden. Further, message input may be realized by using voice input and voice output, allowing the user to have voice conversations with other users and the system (AI).

Further, when the user interacts with the system, the interaction may be performed using an avatar. For example, the controller 100 presents an avatar of the system. For example, an avatar icon, a character image, a 3D model, or the like may be displayed in R104 of FIG. 13. Further, an avatar may be presented on the timeline indicated by R109 in FIG. 15.

For example, by presenting an avatar from the system, when the user transmits a message and/or a file to the avatar, the message or file is stored (for example, S102 to S108 in FIG. 10). Further, the system may output a processing candidate by executing evaluation process and outputting it via the avatar.

Further, when executing the evaluation process and displaying processing candidates, the avatar (the controller 100) may determine the processing candidates based on the files and messages related to the current workspace. Further, when a theme (sub-theme) is selected, the avatar may determine the processing candidates based on the messages and files included in the lower concepts of the theme (sub-theme).

Further, an avatar corresponding to the range of files and messages used for the evaluation process may be displayed. For example, when the user speaks to (transmits a message to, transmits a request to) a first avatar, evaluation process is executed based on the messages and/or files in the workspace corresponding to the first avatar to determine processing candidates. Further, when the user speaks to a second avatar, evaluation process is executed based on the messages and/or files included in the theme corresponding to the workspace, corresponding to the second avatar, to determine processing candidates.

The system may determine processing candidates from an avatar corresponding purely to the group level, or may determine processing candidates from an avatar corresponding to a level including lower concepts or upper concepts.

In this way, by allowing the user to transmit messages and files to the avatar, or by presenting processing candidates from the avatar, it is possible to provide a system that is familiar to the user.

### 2. Second Embodiment

Hereinafter, a second embodiment will be described. The second embodiment is an embodiment that enables association between messages and files.

In the second embodiment, descriptions of parts having the same hardware and software configurations as in the first embodiment are omitted, and differences from the first embodiment will be mainly described.

### 2.1 Flow of Processing

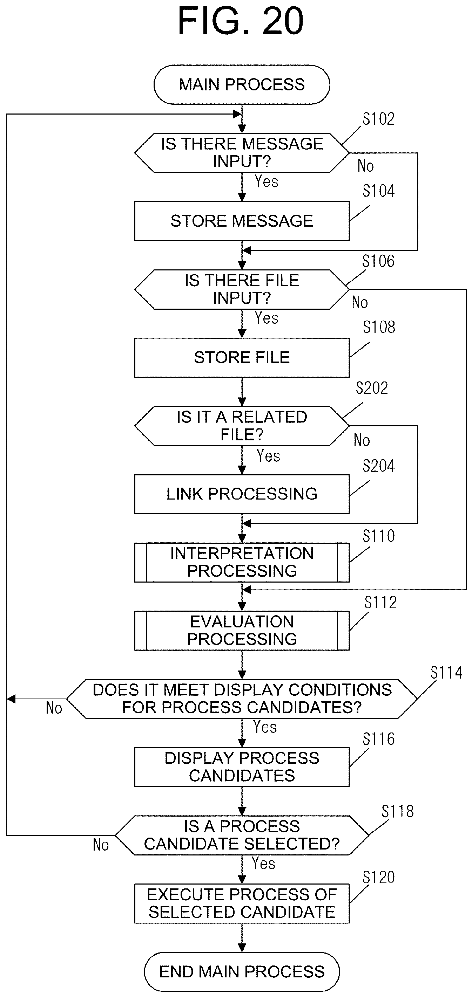

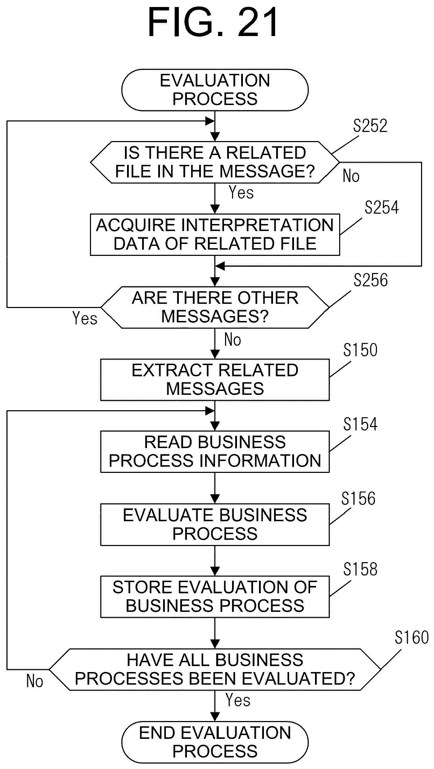

Hereinafter, the flow of processing in the present embodiment will be described. FIG. 20 is a diagram illustrating a flow of main process of the first server device 10, and FIG. 21 is a diagram illustrating a flow of evaluation process.

### 2.1.1 Flow of Main process

FIG. 20 replaces FIG. 10 of the first embodiment, and S202 and S204 are executed between S108 and S110.

Next, the controller 100 determines whether the file stored in the file storage area 1132 in S108 is a related file (S202). Here, the related file refers to the following file. Further, the related file may be the content of the related file.
(1) A file attached to a message, or a file posted together with a message (a file transmitted together from the terminal device 20 to the first server device 10). Further, when inputting a message, the user may specify an already transmitted file or the content of the file.
(2) A file linked to a message by the user. For example, when the user selects a message and then selects a file, the selected file becomes a related file.

Further, the determination by the controller 100 as to whether there is a related file may be performed at any of the following timings.
(1) Determine each time a message or file is input. For example, the controller 100 may determine whether there is a related file each time a message is input from the user. Further, the controller 100 may determine whether there is a related file each time a file is input from the user.
(2) Determine each time a new file is input. For example, when a new file is transmitted from the user, the controller 100 may determine whether there is a related file. Further, when a message can be retransmitted (for example, quoted, reposted, etc.), the controller 100 may determine that there is a related file when a new message other than a repost is transmitted.
(3) Determine at predetermined timings. For example, the controller 100 may determine whether there is a related file every time a predetermined time elapses (for example, every 30 seconds, every 1 minute, etc.).

When the controller 100 determines that the file is a related file, the controller 100 performs link processing by storing the link state between the received message and the file as mutual link information in the link information storage area 1140 (S204). Here, the controller 100 stores the identification information of the message and the identification information of the file as mutual link information. As an example, the controller 100 stores the identification information of the message corresponding to the identification information of the file in the file link information storage area 1142, and stores the identification information of the file corresponding to the identification information of the message in the message link information storage area 1144.

### 2.1.2 Flow of Evaluation process

FIG. 21 replaces FIG. 12 of the first embodiment, and the processing from S252 to S256 is executed before S150.

First, the controller 100 determines whether the message has a related file (S252). For example, if a FileID is stored in FileLink stored in the message link information storage area 1144 based on the MessageID as the identification information of the message, the controller 100 may determine that there is a related file.

When the message has a related file, the controller 100 acquires interpretation data of the related file (S252; Yes -> S254). For example, the controller 100 specifies the FileID, which is the identification information of the file corresponding to the MessageID, from the message link information storage area 1144.

Subsequently, the controller 100 determines whether there is an other message (S256). For example, when no readable message is stored in the message storage area 1134, the controller 100 determines that there is no other message, extracts related messages, and stores them in the related message storage area 1154 (S256; No -> S150). On the other hand, for example, when there is a readable message in the message storage area 1134, the controller 100 determines whether the read message has a related file (S256; Yes -> S252).

### 2.2 Operation Example

Since the controller 100 can acquire only the interpretation data of the file related to the message, it becomes possible to evaluate the business process based on a more accurate business situation.

### 3. Third Embodiment

Hereinafter, a third embodiment will be described. This is an embodiment in which interpretation data is displayed and can be appropriately modified.

In the third embodiment, descriptions of parts having the same hardware and software configurations as in the first embodiment are omitted, and differences from the first embodiment will be mainly described.

### 3.1 Flow of Processing

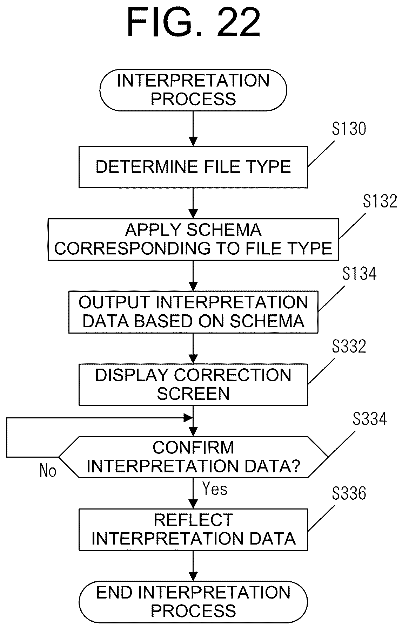

Hereinafter, the flow of processing in the present embodiment will be described. FIG. 22 is a diagram illustrating interpretation process.

### 3.1.1 Flow of Interpretation process

FIG. 22 replaces FIG. 11 of the first embodiment, and S332, S334, and S336 are executed after S134.

First, the controller 100 displays on the display 240, as a modification screen capable of modifying the interpretation data, for example, a display screen that displays attributes defined in the schema of the interpretation data and values corresponding to the attributes in a state where the values can be modified (S332). Here, the modification screen is, for example, a user interface capable of confirming/appropriately modifying the recognition result.

Next, the controller 100 determines whether the interpretation data has been finalized (S334). Here, as a method for determining whether the interpretation data has been finalized, for example, it may be determined that the interpretation data has been finalized when the modification screen is closed, or when an interface such as a finalization button is selected. When the interpretation data has been finalized, the controller 100 reflects, for example, the finalized interpretation data in the interpretation data storage area 1152 (S334; Yes -> S336). On the other hand, when the interpretation data has not been finalized, for example, the determination continues until the interpretation data is finalized (S334; No).

### 3.2 Operation Example

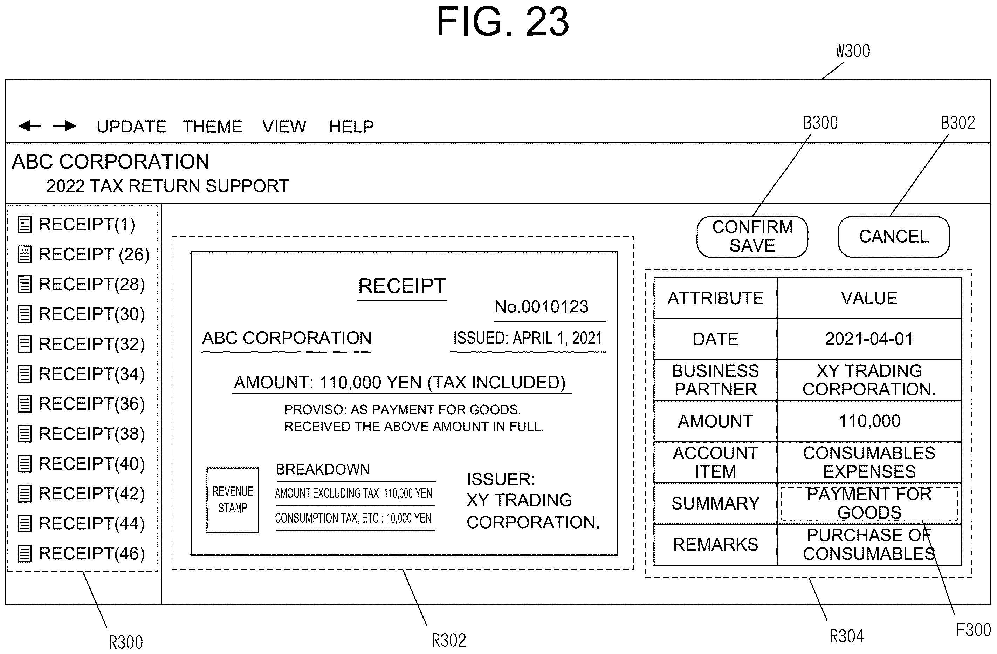

FIG. 23 is a diagram illustrating an example of the operation of the terminal device 20 in the present embodiment. FIG. 23 is a diagram illustrating an example of a display screen W300 displayed on the display 240 as a modification screen when the user uploads a file.

On the display screen W300 in FIG. 23, a file display area R300 for displaying a list of files, and a preview display area R302 for preview-displaying the file for which interpretation data has been output are secured. Furthermore, on the display screen W300, an interpretation data display area R304 for displaying attributes defined in the schema based on the interpretation data and values corresponding to the attributes, and allowing modification of each value of the interpretation data, is secured, and a finalization button B300 and a cancel button B302 are displayed. Here, in the interpretation data display area R304, an application editing form F300 for displaying "Item Price" as the interpretation data for application is displayed. Note that here, the display screen W300 displays the workspace in full screen, displaying the modification screen clearly.

Here, when the user selects the application editing form message form F100, inputs "Purchase of stationery" instead of "Item Price," and selects the finalization button B300, the controller 100 finalizes the application of the interpretation data as "Purchase of stationery" and outputs the interpretation data. On the other hand, when the user selects the cancel button B302, for example, the processing may be canceled without outputting the interpretation data, or the interpretation data can be finalized and output as is, assuming no modification.

In this way, in the present embodiment, since the interpretation data can be modified, it becomes possible to improve the accuracy of the generated file and allow the language model to recognize a more accurate business situation. For example, in tax processing such as final tax returns, there are many OCR-processed receipts, etc., and the controller 100 can detect, as a trigger, that user modification confirmation has been performed on the interpretation data according to the schema. With this trigger, the controller 100 can, for example, increase the evaluation of tax return document creation. This makes it possible to improve user convenience, and the like.

Further, in the present embodiment, the modification screen for modifying the interpretation data is displayed on the display 240, but a display screen capable of confirming AI-interpreted attributes (attributes defined in the schema) may also be displayed for documents for which a schema is defined.

### 4. Modifications

The present disclosure is not limited to the embodiments described above, and various modifications are possible. That is, embodiments obtained by combining technical means appropriately modified within a range not departing from the gist of the present disclosure are also included in the technical scope.

Further, in the above-described embodiments, each embodiment is described separately for convenience of explanation, but they can be executed in combination as long as possible. Further, there is an intention to acquire rights for any technique described in the specification in amendments, divisional applications, or the like.

Further, the programs that operate in each device in each embodiment are programs that control a CPU or the like (programs that cause a computer to function) so as to realize the functions of the above-described embodiments. Then, information handled by these devices is temporarily accumulated in a temporary storage device (for example, RAM) during processing, and then stored in various ROM or HDD storage devices, and read, modified, and written by the CPU as necessary.

Here, as the recording medium for storing the program, any of a semiconductor medium, such as ROM or a non-volatile memory card; an optical recording medium or a magneto-optical recording medium, such as Digital Versatile Disc (DVD), Compact Disc (CD), or Blu-ray(registered trademark) Disc (BD); a magnetic recording medium, such as magnetic tape or a flexible disk; or the like may be used.

Further, when distributing the program on the market, the program can be stored in a portable recording medium for distribution, or transferred to a server computer connected via a network such as the Internet. In this case, the storage device of the server device is, of course, also included in the present disclosure.

Further, the data described above is not necessarily stored inside the device, but may be stored in an external device and called up as appropriate. For example, the data may be stored in a Network Attached Storage (NAS) or on the cloud.

Note that the scope of the present disclosure is not limited to the configurations explicitly described in the specification, and combinations of techniques disclosed in this specification are also included in the scope. Although the configurations for which a patent is sought in the present disclosure are described in the appended claims, there is no intention to exclude them from the technical scope on the grounds that they are not described in the claims.

Further, the descriptions "in the case of ~" and "when ~" in the above specification are described as examples, and are not intended to limit the configurations to the described contents. Configurations other than these cases and times, which are obvious to those skilled in the art, are also disclosed, and there is an intention to acquire rights for them.

Further, the processing and data flows described in the specification with an order are not limited to the described order. For example, configurations in which some parts of the processing are deleted or the order is changed are also disclosed, and there is an intention to acquire rights for them.

Further, although the functions described in the embodiments are described as being executed by each device, they may be realized by one device, or an external server may be used.

Further, each functional block or various features of the devices used in the above-described embodiments may be implemented or executed by an electric circuit, for example, an integrated circuit or multiple integrated circuits. The electric circuit designed to execute the functions described in this specification may include a general-purpose processor, a digital signal processor (DSP), an application specific integrated circuit (ASIC), a field programmable gate array (FPGA), or other programmable logic devices, discrete gates or transistor logic, discrete hardware components, or a combination thereof. The general-purpose processor may be a microprocessor, or may be a conventional processor, controller, microcontroller, or state machine. The above-described electric circuit may be configured by a digital circuit, or may be configured by an analog circuit. Further, if a technology for integrated circuitry appears that replaces current integrated circuits due to advances in semiconductor technology, one or more aspects of the present disclosure may also use the new integrated circuit according to that technology.

### REFERENCE SIGNS LIST

1: System
10: First server device
20: Terminal apparatus
30: Second server device
100, 200, 300: Controller
110, 210, 310: Memory
112, 212, 312: Storage
114, 214, 314: ROM
116, 216, 316: RAM
240: Display
250: Operation acceptor
170, 270, 370: Communicator

## Claims

1. An information processing system comprising:
a memory (110) to store business processes; and
a controller (100), wherein
the controller (100) acquires a message and a file, evaluates the business processes based on the acquired message and/or file, and outputs the business process that is a candidate from among the business processes based on a result of evaluating the business processes.

2. The information processing system according to claim 1, wherein
the memory (110) stores a schema corresponding to a type of the file, and
the controller (100) outputs interpretation data using the schema according to the type of the file, and evaluates the business processes based on the interpretation data and the message and/or file.

3. The information processing system according to claim 2, wherein the controller (100) executes the business process including generation of a prompt based on the message and the interpretation data.

4. The information processing system according to claim 2, wherein the controller (100) outputs a display screen on which the interpretation data can be modified.

5. The information processing system according to claim 1, wherein the controller (100) calculates results of evaluating the business processes as evaluation values for each business process, and selects the business process whose evaluation value is equal to or greater than a threshold value, as the candidate.

6. The information processing system according to claim 1, wherein
the memory (110) stores one or more acquired messages as history messages, and
the controller (100) identifies one business process from among the candidate business processes based on the history messages, and outputs the identified business process in an identifiable manner.

7. The information processing system according to claim 1, wherein the memory (110) stores the message and the file in association with each group, and the controller (100) evaluates one or more business processes based on the message and the file associated with each group.

8. The information processing system according to claim 1, wherein the controller (100) presents an avatar of the system, acquires the message and/or the file transmitted from a user, and outputs the business process via the avatar when outputting the business process.

9. The information processing system according to claim 7, wherein
the avatar corresponds to the group, and
the controller (100) stores the message and/or the file transmitted from the user in association with the group, and evaluates one or more business processes based on the message and the file associated with each group when outputting the business process corresponding to the avatar.

10. The information processing system according to claim 1, wherein the controller (100) is capable of linking the message and the file, and can refer to the linkage when evaluating the business processes.

11. A processing method comprising:
storing of storing business processes; and
controlling, wherein
the controlling includes: acquiring a message and a file; evaluating the business processes based on the acquired message and/or file; and outputting the business process that is a candidate from among the business processes based on a result of evaluating the business processes.

12. A non-transitory computer-readable medium causing a computer to implement:
a storage function of storing business processes; and
a control function, wherein
the control function includes: acquiring a message and a file; evaluating the business processes based on the acquired message and/or file; and outputting the business process that is a candidate from among the business processes based on a result of evaluating the business processes.
